# EUROPEAN PATENT APPLICATION

(11) **EP 4 679 039 A1**
(43) Date of publication of application: **14.01.2026**
(21) Application number: 24770258.2
(22) Date of filing: 01.02.2024
(51) Int. Cl.: G01D 5/245

(54) **PULSE SIGNAL GENERATOR AND ENCODER**

(30) Priority: 10.03.2023 JP 2023037801
(71) Applicant: Oriental Motor Co., Ltd., Tokyo 111-0056 (JP); Ozeki, Sakao, Kakegawa-shi, Shizuoka, 436-0061 (JP)
(72) Inventor: HOUDA, Akihiko, Tsukuba-shi, Ibaraki 300-2635 (JP); SOMEYA, Masayuki, Tsukuba-shi, Ibaraki 300-2635 (JP); OZEKI, Sakao, Kakegawa-shi, Shizuoka 436-0061 (JP)
(74) Representative: Witte, Weller & Partner Patentanwälte mbB
(86) International application number: PCT/JP2024/003290
(87) International publication number: WO 2024/190138

(57) **Abstract**

A pulse signal generator (1) includes a power generation sensor (100) and a magnetic field generation source (400). The power generation sensor (100) includes a magnetic wire (110) that is caused to exhibit a large Barkhausen effect by an alternating magnetic field applied thereto in an axis direction (x), a coil (120) wound around the magnetic wire (110), and a pair of magnetic flux conducting pieces (130, 131) magnetically coupled to the opposite ends of the magnetic wire (110). The pair of magnetic flux conducting pieces (130, 131) include a pair of axis-orthogonal portions (133) extending parallel to each other in an axis-orthogonal direction (z) orthogonal to the axis direction (x), and a pair of axis-parallel portions (134) extending toward each other in the axis direction (x) from the distal ends of the axis-orthogonal portions (133). The power generation sensor (100) is configured to have a detection region (140) on a side of the axis-parallel portions (134) opposite from the magnetic wire (110). The magnetic field generation source (400) has a magnetic pole that is moved along a track (30) extending through the detection region (140) by relative movement thereof with respect to the power generation sensor (100).

## Description

### RELATED APPLICATION

This application claims the benefit of priority to Japanese Patent Application No. 2023-037801 filed on March 10, 2023, the disclosure of which is entirely incorporated herein by reference.

### TECHNICAL FIELD

The present invention relates to a pulse signal generator employing a power generation sensor that generates electric power in response to a change in magnetic field, and an encoder including the pulse signal generator.

### BACKGROUND ART

Magnetic wires having a large Barkhausen effect (large Barkhausen jump) are known in the name of Wiegand wire or pulse wire. Such a magnetic wire includes a core portion, and a shell portion provided around the core portion. One of the core portion and the shell portion is a soft (magnetically soft) layer in which its magnetization direction is reversed even by application of a weak magnetic field, and the other of the core portion and the shell portion is a hard (magnetically hard) layer in which its magnetization direction is reversed only by application of a strong magnetic field. A power generation sensor is produced by winding a coil around the magnetic wire.

W hen the hard layer and the soft layer are magnetized in the same direction axially of the wire and the strength of an external magnetic field applied in a direction opposite to that magnetization direction is increased to a certain magnetic field strength, the magnetization direction of the soft layer is reversed. The reversal of the magnetization direction starts at a certain position of the magnetic wire to propagate to the entire wire, whereby the magnetization direction of the soft layer is totally reversed. At this time, the large Barkhausen effect is exhibited to induce a pulse signal in the coil wound around the magnetic wire. When the external magnetic field strength is further increased to another certain magnetic field strength, the magnetization direction of the hard layer is reversed.

The magnetic field strength at which the magnetization direction of the soft layer is reversed is herein referred to as "operational magnetic field" and the magnetic field strength at which the magnetization direction of the hard layer is reversed is herein referred to as "stabilization magnetic field."

A voltage outputted from the coil is characteristically constant irrespective of the change rate of an input magnetic field (external magnetic field), and is free from chattering because of its hysteresis with respect to the input magnetic field. For this reason, the pulse signal outputted from the coil is used in a position detection device and the like. Since the output from the coil has electric power, a sensor of power generation type (power generation sensor) requiring no external electric power supply can be provided.

In order to provide the large Barkhausen effect, it is necessary to reverse the magnetization direction of only the soft layer in a state such that the magnetization directions of the hard layer and the soft layer are consistent. Even if the magnetization direction of only the soft layer is reversed in a state such that the magnetization directions of the hard layer and the soft layer are inconsistent, no pulse signal is generated or a pulse signal having a very small amplitude is generated.

In order to maximize the available electric power, it is important that the reversal of the magnetization direction of the soft layer propagates to the entire magnetic wire in a state such that the magnetization direction of the magnetic wire is entirely consistent. If the magnetization direction of the magnetic wire is partly inconsistent, a pulse signal having a very small amplitude is generated. Therefore, it is preferred to apply a uniform magnetic field to the entire magnetic wire.

In order to stably generate a sufficient electric pulse signal, the power generation sensor is required to satisfy the following conditions on the magnetic field to be applied to the magnetic wire:
(1) The direction of the magnetic field is parallel to the magnetic wire;
(2) The strength of the magnetic field is sufficiently high (not lower than the stabilization magnetic field); and
(3) The direction and the strength of the magnetic field are uniform along the entire magnetic wire.

Pulse signal generators employing such a power generation sensor are disclosed, for example, in PTL 1, PTL 2 and PTL 3.

In FIG. 3 of PTL 1, there are shown a magnetic field generating member of a dipole magnet that is rotatable about a rotation center and a power generation element (power generation sensor) that is opposed to the magnetic field generating member at a position offset from the rotation center. The power generation element has magnetic field collecting members respectively provided at the opposite ends of the magnetic wire thereof. The magnetic field collecting members each extend parallel to a rotation center axis toward the magnetic field generating member. The magnetic field collecting members alleviate the influence of the offset layout on the reduction of magnetic flux. That is, the magnetic field collecting members collect the magnetic flux at positions closer to the magnet to enhance the magnetic flux to be applied to the magnetic wire, thereby alleviating the output phase difference of the pulse signal. Further, the function of the magnetic field collecting members extending toward the magnetic field generating member improves the uniformity of the magnetic flux density of the magnetic wire, thereby suppressing the deterioration of the power generation characteristic properties. In an example embodiment of PTL 1, the magnetic wire has a length of 10 mm to 13 mm, and the magnet has a diameter of 20 mm to 22 mm. The magnetic wire is spaced a distance of 6 mm to 9 mm from the surface of the magnet.

In order to increase the magnetic field strength which may be reduced due to the offset layout, it is merely necessary to reduce the distance between the magnet and the power generation sensor. If the distance is reduced, however, the offset layout in the structure of the power generation sensor shown in FIG. 1 of PTL 1 deteriorates the characteristic properties because the magnetic flux enters the axially middle portion of the magnetic wire from the magnet. Therefore, it is necessary to provide a sufficient space between the magnet and the magnetic wire to reduce the strength of the magnetic field entering the axially middle portion of the magnetic wire to a level free from any problems. Therefore, the size reduction is difficult with the need for the provision of the sufficient space between the magnetic wire and the magnet. In PTL 1, the magnetic field collecting members are provided as extending toward the magnet for compensation for an insufficient magnetic field strength occurring due to the provision of the sufficient space, whereby the magnetic field is collected in the vicinity of the magnet to be induced in the magnetic wire. Thus, a magnetic field strength required for the operation is ensured.

The magnetic field strength is increased as the magnetic field collecting members are disposed closer to the magnet, but another problem arises. Where the offset layout of the power generation sensor and the dipole magnet are employed in combination, the strength of the magnetic field in the vicinity of the magnet intrinsically has a flat range in which the magnetic field strength is less variable with respect to a rotation angle. The flat range is increased as the ratio of an offset amount to the length of the magnetic wire is increased. As distances between the magnet and the magnetic field collecting members are reduced, the influence is increased. If the magnetic field collecting members are disposed too close to the magnet, therefore, the phase difference (hysteresis) of a pulse generation position is increased. This is described with reference to FIG. 16 in PTL 1. In PTL 1, the influence of the magnetic field entering the axially middle portion of the magnetic wire is expressed as the uniformity of a magnetic flux density distribution. Where a consideration is given to a case in which the magnetic field collecting members are each divided into a first component disposed on a side of the magnetic wire opposite from the magnetic field generating member and a second component disposed on a side of the magnetic wire adjacent to the magnetic field generating member, an increase in the volume ratio of the second component to the first component means that the magnetic field collecting members are disposed closer to the magnet.

Further, the magnetic field collecting members shown in FIG. 1 of PTL 1 each have a shape such that the magnetic field collecting efficiency is poorer with a smaller magnet opposition area. For the aforementioned reason, the magnetic field collecting members cannot be disposed too close to the magnet, so that the magnet needs to have an increased size in order to ensure the magnetic field strength required for the operation. Therefore, the size reduction is difficult.

In PTL 2, four magnets are used as a magnetic field generation source to change a magnetic field twice per each turn with respect to three power generation sensors disposed at an angular interval of 120 degrees. The magnets are movable on a rotation track having a radius R, and the power generation sensors are each arranged so that the opposite ends thereof are located on the rotation track. It is stated that size reduction can be more efficiently achieved by providing the power generation sensors tangentially of a circle defined about a rotation axis than by providing the power generation sensors radially of the circle. Where the power generation sensors are disposed tangentially of the circle, the power generation sensors are each configured so that, when the opposite ends thereof are opposed to magnets of different polarities, a magnetic flux passes through the magnetic wire thereof to cause a pulse generating operation. When any one of the magnets is located at the middle position of any of the power generation sensors, on the other hand, the magnetic flux is directed from the axially middle portion to the opposite ends of the magnetic wire to thereby adversely influence the operation. In PTL 2, the adverse influence is eliminated by providing a partition member separately from the power generation sensors to block the magnetic flux directed toward the axially middle portion of the magnetic wire.

In PTL 2, the magnetic field directed toward the axially middle portion of the magnetic wire is blocked by the partition member, so that gaps defined between the magnets and the power generation sensors can be reduced as shown in FIG. 1 of PTL 2.

However, the arrangement of PTL 2 requires higher costs with the need for the provision of the partition member that blocks the magnetic flux. Further, the magnet center track is required to pass through the opposite ends of the power generation sensors, making it impossible to further reduce the size of the magnetic field generating member. In addition, the pitch of the magnets (the pitch of the magnetic poles) needs to be substantially equal to the length of the magnetic wire. This makes it difficult to further reduce the size and to further increase the number of the magnetic poles.

In FIG. 2 of PTL 3, pulse signals are generated by using power generation sensors each including a magnetic body (magnetic field collecting members) designed in conformity with four rotatable rectangular magnets. Further, a rotation detector of PTL 3 includes a side yoke provided separately from the power generation sensors. The side yoke is configured so that, when the power generation sensors are each brought into opposed relation to any one of the magnets, the magnetic flux of the magnet is prevented from directing to the magnetic wire, i.e., the magnetic flux of the magnet is directed toward the neighboring magnets. With the function of the side yoke, the magnets can be disposed closer to the power generation sensors.

In the arrangement of PTL 3, however, the size reduction is difficult because it is necessary to provide the power generation sensors outward of the magnet rotation track. Further, the power generation sensors each including the magnetic body (magnetic field collecting members) designed in conformity with the shape of the magnet are poor in versatility. In addition, the costs are problematic with the need for the provision of the side yoke.

Measurement apparatuses generally require size reduction, and a pulse signal generator for use in such a measurement apparatus also requires size reduction. For improvement of the resolution of the measurement apparatus, the pulse signal generator is often configured with the use of a multipole magnet in combination with the power generation sensor.

Further, it is often desired to design the measurement apparatus with its rotation axis extending therethrough. This makes it impossible to provide components on the rotation axis center of the measurement apparatus. Where the power generation sensor is not located on the axis center, the power generation sensor has two layout options: a layout such that the power generation sensor is disposed radially; and a layout such that the power generation sensor is disposed circumferentially tangentially. The latter layout option is suitable for the size reduction, because the former layout option increases the radius.

### CITATION LIST

### PATENT LITERATURE

PTL 1: JP 7109713
PTL 2: JP 5964117
PTL 3: JP 6959588

### SUMMARY OF INVENTION

### PROBLEMS TO BE SOLVED BY INVENTION

One example embodiment of the present invention provides a pulse signal generator configured to allow for the size reduction and to ensure an improved resolution and an improved layout flexibility. Another example embodiment of the present invention provides an encoder including such a pulse signal generator.

### SOLUTION TO PROBLEMS

1. A pulse signal generator is provided, which generates a pulse signal based on the relative movement of a power generation sensor and a magnetic field generation source. The power generation sensor includes: a magnetic wire that is caused to exhibit a large Barkhausen effect by an alternating magnetic field applied thereto in an axis direction thereof; a coil wound around the magnetic wire; and a pair of magnetic flux conducting pieces that include a pair of magnetically soft components respectively magnetically coupled to the opposite end portions of the magnetic wire and are symmetrical with each other with respect to a symmetry plane defined at the axially middle position of the magnetic wire with respect to the axis direction. The pair of magnetic flux conducting pieces include: a pair of axis-orthogonal portions respectively fixed to the opposite end portions of the magnetic wire and extending parallel to each other in an axis-orthogonal direction orthogonal to the axis direction respectively from the opposite end portions of the magnetic wire; and a pair of axis-parallel portions extending toward each other in the axis direction from the distal ends of the axis-orthogonal portions with their adjacent ends opposed to and spaced a gap from each other in the axis direction. The distance of the gap between the adjacent ends as measured in the axis direction is 5% to 50% of a distance between the magnetic wire connection positions of the pair of axis-orthogonal portions as measured in the axis direction. The power generation sensor is configured to have a detection region located on a side of the axis-parallel portions opposite from the magnetic wire. The power generation sensor and the magnetic field generation source are disposed with a gap defined therebetween in the axis-orthogonal direction. The magnetic field generation source has at least one magnetic pole that is moved along a track extending through the detection region by the relative movement. In one example embodiment, the track includes a linear track portion extending parallel to the axis direction in the detection region. In another example embodiment, the track includes an arcuate track portion having a tangential line extending parallel to the axis direction in the detection region. The arcuate track portion may have a center on a center axis extending parallel to the axis-orthogonal direction.

With this arrangement, a magnetic field in the detection region is guided to the opposite ends of the magnetic wire by the magnetic flux conducting pieces including the magnetically soft components. In addition, the axis-parallel portions disposed parallel to the axis direction of the magnetic wire are present between the detection region and the magnetic wire, so that a magnetic flux directed from the detection region toward the axially middle portion (axially intermediate position) of the magnetic wire is blocked by the axis-parallel portions. In particular, where the axial distance between the adjacent ends of the axis-parallel portions of the pair of magnetic flux conducting pieces is 5% to 50% of the distance between the magnetic wire connection positions of the axis-orthogonal portions, an excellent magnetic shielding effect can be provided. Since the magnetic field can be applied to a wider axial range of the magnetic wire in the axis direction, the large Barkhausen effect can be sufficiently induced. Thus, the power generation sensor can be provided, which is capable of generating higher output signals.

In addition, the power generation sensor includes the magnetic flux conducting pieces, and the magnetic wire is fixed to and connected to the magnetic flux conducting pieces. Therefore, it is merely necessary to provide the magnetic field generation source (typically a magnet) as a detection medium in the detection region. Accordingly, magnetic field generation sources having different shapes and/or different polarities can be easily used in combination with the power generation sensor.

When the power generation sensor and the magnetic field generation source are moved relative to each other, the magnetic pole of the magnetic field generation source is moved along the track extending through the detection region. The track includes the linear track portion parallel to the axis direction in the detection region, or includes the arcuate track portion having the tangential line parallel to the axis direction in the detection region. Therefore, when the magnetic pole passes through the detection region, the magnetic pole is brought into opposed relation to the axis-parallel portions, so that the magnetic flux generated by the magnetic pole is applied to the magnetic wire through the magnetic flux conducting pieces.

The axis-parallel portions of the magnetic flux conducting pieces extend in the axis direction of the magnetic wire and, therefore, even if the magnetic pole and the magnetic wire are spaced a shorter distance from each other, the magnetic flux is less liable to enter the axially middle portion of the magnetic wire from the magnetic pole due to the magnetic shielding effect. Therefore, the magnetic wire can be disposed closer to the track of the magnetic pole, making it possible to correspondingly reduce the size of the pulse signal generator.

The axis-parallel portions extending in the axis direction of the magnetic wire are capable of collecting a greater amount of magnetic flux. Even if the magnetic flux generated by the magnetic pole is weak, therefore, a magnetic field required for the large Barkhausen effect can be applied to the magnetic wire. Even if the number of magnetic poles is increased and the magnetic poles each correspondingly have a reduced size to thereby each generate weak magnetic flux, the power generation sensor can generate pulse signals without any trouble. Further, the axis-parallel portions can be brought into opposed relation to the magnetic poles in a wider range of the detection region, and substantially prevent the magnetic flux from entering the axially middle portion of the magnetic wire. This arrangement can adapt itself to different magnetic pole pitches and, therefore, can advantageously improve the resolution by increasing the number of magnetic poles. The power generation sensor can provide different resolutions with a single design without the need to increase the size of the magnet according to the increase in the number of the magnetic poles.

Even if the magnetic field generation source includes a rotatively movable magnet, a sufficiently strong magnetic field can be applied to the magnetic wire with the power generation sensor disposed in offset relation from the rotation center. That is, the magnetic field can be collected in a wider range by the axis-parallel portions, so that the power generation sensor and the magnetic field generation source can be arranged relative to each other with a higher layout flexibility.

2. In the pulse signal generator according to Item 1, the pair of magnetic flux conducting pieces are configured to block a magnetic field directed toward the axially middle portion of the magnetic wire from a part of the magnetic field generation source present in the detection region, and to correct a magnetic field generated in a space containing the pair of magnetic flux conducting pieces into a magnetic field directed in the axis direction and apply the corrected magnetic field to the magnetic wire.

With this arrangement, the magnetic flux conducting pieces have a magnetic field correcting function to correct the magnetic field applied from the part of the magnetic field generation source present in the detection region, thereby making it possible to block the magnetic field directed toward the axially middle portion of the magnetic wire and to apply the magnetic field in the axis direction between the opposite ends of the magnetic wire. Thus, the large Barkhausen effect can be sufficiently induced, so that the pulse signal generator can generate higher output pulse signals.

3. In the pulse signal generator according to Item 1 or 2, the distance of the gap as measured in the axis direction is 20% to 40% of the distance between the magnetic wire connection positions of the pair of axis-orthogonal portions as measured in the axis direction.

With this arrangement, the large Barkhausen effect intrinsic to the magnetic wire can be generally fully utilized, so that the pulse signal generator can generate even higher output pulse signals.

4. In the pulse signal generator according to any one of Items 1 to 3, the axis-orthogonal portions of the magnetic flux conducting pieces respectively have wire placement portions each formed with a hole or a groove extending therethrough in the axis direction, and the magnetic wire extends through the wire placement portions of the axis-orthogonal portions and is fixed to the axis-orthogonal portions.

With this arrangement, the magnetic wire extends through the axis-orthogonal portions, whereby the opposite end portions of the magnetic wire can be reliably magnetically coupled to and fixed to the magnetic flux conducting pieces.

The axis-orthogonal portions may have a size that is, for example, substantially equal to the diameter of the coil. In this case, the axis-parallel portions are present between the magnetic wire and the detection region, so that the wire placement portions are located away from (offset from) the detection region when the magnetic flux conducting pieces are viewed in the axis direction of the magnetic wire. This arrangement is advantageous in that the power generation sensor can be configured to have a reduced size.

5. In the pulse signal generator according to any one of Items 1 to 4, the thickness of each of the axis-orthogonal portions as measured in the axis direction at the magnetic wire connection position is 10% to 20% of the overall length of the magnetic wire.

With this arrangement, magnetic paths defined along the axis-orthogonal portions are prevented from being excessively narrowed. Further, substantial reduction in the pickup efficiency of the large Barkhausen effect can be prevented, which may otherwise occur due to the presence of the axis-orthogonal portions. Thus, the pulse signal generator can be provided, which is capable of generating higher output pulse signals.

6. In the pulse signal generator according to any one of Items 1 to 5, the magnetically soft components are each composed of a material having a magnetic permeability of not less than 500 and a coercivity that is not greater than that of the magnetic wire.

Such a material has lower magnetic resistance, lower hysteresis, lower self-inductance and other characteristic properties. Thus, even if a highfrequency alternating magnetic field is applied to the magnetic flux conducting pieces when the magnetic field generation source is moved at a higher speed, the output characteristic of the power generation sensor is less liable to be influenced by the highfrequency alternating magnetic field. Specifically, the magnetically soft components are preferably composed of a Ni-ferrite-containing material or a Mn-ferrite-containing material.

7. In the pulse signal generator according to any one of Items 1 to 6, the power generation sensor further includes surface-mounting external terminal electrodes respectively provided on the axis-parallel portions of the magnetic flux conducting pieces as facing the detection region.

This arrangement can reduce the number of components of the power generation sensor. Thus, the pulse signal generator can be provided, which includes the power generation sensor of a surface-mounting type having a simple and smaller-size structure.

8. The pulse signal generator according to any one of Items 1 to 7 further includes a printed board provided between the power generation sensor and the magnetic field generation source.

Typically, electric components and/or electronic components are mounted on one or both of the opposite major surfaces of the printed board. The power generation sensor may be mounted on either of the major surfaces of the printed board. More specifically, the power generation sensor may be surface-mounted on the major surface of the printed board by connecting the external terminal electrodes provided on the axis-parallel portions to a wiring conductor provided on the major surface of the printed board.

9. In the pulse signal generator according to any one of Items 1 to 8, the magnetic field generation source includes a magnet having the magnetic pole, and a distance between the magnetic wire and the magnet as measured in the axis-orthogonal direction when the magnetic pole is present on the track in the detection region is not greater than 50% of the overall length of the magnetic wire.

With this arrangement, the distance between the magnetic wire and the magnet is shorter, whereby the pulse signal generator can have a correspondingly smaller size. A layout in which the distance between the magnetic wire and the magnet is not greater than 50% of the overall length of the magnetic wire can be achieved by using the magnetic flux conducting pieces respectively having the axis-parallel portions. Where magnetic flux conducting pieces each having no axis-parallel portion are used, the magnetic flux from the magnet enters the axially middle portion of the magnetic wire. This makes it impossible to uniformly apply the magnetic field to the entire magnetic wire in the axis direction, making it difficult to provide a design that can induce the large Barkhausen effect.

10. In the pulse signal generator according to any one of Items 1 to 9, the track has the linear track portion, and the magnetic field generation source has a plurality of magnetic poles. Further, the magnetic pole pitch of the magnetic poles (magnetic pole interval) is shorter than a distance between the axially middle positions of a pair of crossing portions, defined with respect to the axis direction, at which the magnetic wire crosses the axis-orthogonal portions of the pair of magnetic flux conducting pieces (a distance between the axially middle positions of the axis-orthogonal portions of the pair of magnetic flux conducting pieces), and is longer than one half the distance between the axially middle positions of the pair of crossing portions.

With this arrangement, the magnetic pole interval can be reduced, so that the pulse signal generator can be configured to be of a linear motion type having a higher resolution. A design such that the magnetic pole pitch is shorter than the distance between the middle positions of the crossing portions at which the magnetic wire crosses the pair of axis-orthogonal portions can be achieved by using the magnetic flux conducting pieces each having the axis-parallel portion. Where magnetic flux conducting pieces each having no axis-parallel portion but each having only an axis-orthogonal portion are used, a magnetic pole pitch shorter than the distance between the middle positions of the crossing portions at which the magnetic wire crosses the pair of axis-orthogonal portions makes it difficult to provide a design that can induce the large Barkhausen effect.

11. In the pulse signal generator according to any one of Items 1 to 9, the track has the arcuate track portion, and the magnetic field generation source has a plurality of magnetic poles. The angular pitch of the magnetic poles about a center axis of the arcuate track portion is smaller than an interline angle defined between a pair of half-lines respectively extending perpendicularly from the center axis to the axially middle positions of a pair of crossing portions, defined with respect to the axis direction, at which the magnetic wire crosses the axis-orthogonal portions of the pair of magnetic flux conducting pieces, and is greater than one half the interline angle.

With this arrangement, the angular pitch of the magnetic poles can be reduced, so that the pulse signal generator can be configured to be of a rotary type having a higher resolution. A design such that the magnetic pole angular pitch is smaller than the angular interval between the middle positions of the crossing portions at which the magnetic wire crosses the axis-orthogonal portions can be achieved by using the magnetic flux conducting pieces each having the axis-parallel portion. Where magnetic flux conducting pieces each having no axis-parallel portion but each having only an axis-orthogonal portion are used, a magnetic pole angular pitch smaller than the angular interval between the middle positions of the crossing portions at which the magnetic wire crosses the axis-orthogonal portions makes it difficult to provide a design that can induce the large Barkhausen effect.

12. In the pulse signal generator according to any one of Items 1 to 11, the track has the arcuate track portion, and the magnetic field generation source includes a magnet having the magnetic pole. The outer radius of the rotation path of the magnet observed when the magnetic pole is moved along the arcuate track portion is greater than a distance between the center axis of the arcuate track portion and the nearest end of each of the magnetic flux conducting pieces, and is smaller than a distance between the center axis and the furthest end of each of the magnetic flux conducting pieces.

With this arrangement, at least a part of the magnet is brought into opposed relation to the magnetic flux conducting pieces, whereby the power generation sensor can generate a pulse signal. A magnetic field collecting effect provided by the axis-parallel portions of the magnetic flux conducting pieces makes it possible to generate a pulse signal without the need to cause a greater area of the magnet to be opposed to the axis-parallel portions. This makes it possible to reduce the outer radius of the rotation path of the magnet to correspondingly reduce the size of the pulse signal generator.

13. In the pulse signal generator according to any one of Items 1 to 12, the magnetic field generation source has a single magnet having a disk shape or a ring shape.

14. An encoder is provided, which includes the pulse signal generator according to any one of Items 1 to 13.

The above and other objects, features and effects of the present invention will become more apparent from the following description of the example embodiments with reference to the attached drawings.

### BRIEF DESCRIPTION OF DRAWINGS

[FIG. 1A] FIG. 1A is a perspective view of a pulse signal generator according to a first example embodiment.
[FIG. 1B] FIG. 1B is a front view as seen in an arrow direction 101 in FIG. 1A.
[FIG. 2A-2B] FIGS. 2A and 2B show models of a rotary pulse signal generator.
[FIG. 3] FIG. 3 shows the result of a three-dimensional magnetic simulation carried out on an arrangement shown in FIG. 2B.
[FIG. 4] FIG. 4 shows a relationship of the wave height of a pulse signal outputted from a coil versus the ratio of a distance between the adjacent ends of a pair of magnetic flux conducting pieces to a distance between the magnetic wire connection positions of the pair of magnetic flux conducting pieces as determined for the structure of the model (see FIG. 2B).
[FIG. 5A-5C] FIG. 5A is a perspective view for describing the structure of a rotation detection device including the rotary pulse signal generator of the model by way of specific example, and FIG. 5B is a plan view of the rotation detection device. FIG. 5C is a front view as seen in an arrow direction VC in FIG. 5B.
[FIG. 6A-6B] FIGS. 6A and 6B show the structure of another rotation detection device by way of example.
[FIG. 7] FIG. 7 shows the structure of further another rotation detection device with its magnetic poles of the same polarity to be brought into opposed relation to its power generation sensor by way of example.
[FIG. 8A-8B] FIGS. 8A and 8B show the structure of still another rotation detection device by way of example.
[FIG. 9A] FIG. 9A shows the result of a two-dimensional magnetic simulation carried out when a magnet is located in the detection region of a power generation sensor including L-shaped magnetic flux conducting pieces.
[FIG. 9B] FIG. 9B shows the result of the two-dimensional magnetic simulation carried out when the magnet is located in the detection region of the power generation sensor including the L-shaped magnetic flux conducting pieces.
[FIG. 9C] FIG. 9C shows changes in magnetic flux density in a magnetic wire for different magnet positions.
[FIG. 10A] FIG. 10A shows the result of a two-dimensional magnetic simulation carried out when a magnet is located in the detection region of a power generation sensor including I-shaped magnetic flux conducting pieces.
[FIG. 10B] FIG. 10B shows the result of the two-dimensional magnetic simulation carried out when the magnet is located in the detection region of the power generation sensor including the I-shaped magnetic flux conducting pieces.
[FIG. 10C] FIG. 10C shows changes in magnetic flux density in a magnetic wire for different magnet positions.
[FIG. 11A] FIG. 11A shows the result of a two-dimensional magnetic simulation carried out when a magnet is located in the detection region of the power generation sensor including the I-shaped magnetic flux conducting pieces, wherein a distance between the magnet and the magnetic wire as measured in an axis-orthogonal direction is longer than in the simulation shown in FIGS. 10A to 10C.
[FIG. 11B] FIG. 11B shows the result of the two-dimensional magnetic simulation carried out when the magnet is located in the detection region of the power generation sensor including the I-shaped magnetic flux conducting pieces, wherein the distance between the magnet and the magnetic wire as measured in the axis-orthogonal direction is longer than in the simulation shown in FIGS. 10A to 10C.
[FIG. 11C] FIG. 11C shows the result of the two-dimensional magnetic simulation carried out when the magnet is located in the detection region of the power generation sensor including the I-shaped magnetic flux conducting pieces, wherein the distance between the magnet and the magnetic wire as measured in the axis-orthogonal direction is longer than in the simulation shown in FIGS. 10A to 10C.
[FIG. 12A] FIG. 12A shows the result of a two-dimensional magnetic simulation carried out when a plurality of magnetic poles are located in the detection region of the power generation sensor including the L-shaped magnetic flux conducting pieces.
[FIG. 12B] FIG. 12B shows the result of the two-dimensional magnetic simulation carried out when the plurality of magnetic poles are located in the detection region of the power generation sensor including the L-shaped magnetic flux conducting pieces.
[FIG. 12C] FIG. 12C shows the result of the two-dimensional magnetic simulation carried out when the plurality of magnetic poles are located in the detection region of the power generation sensor including the L-shaped magnetic flux conducting pieces.
[FIG. 13A] FIG. 13A shows the result of a two-dimensional magnetic simulation carried out when a plurality of magnetic poles are located in the detection region of the power generation sensor including the I-shaped magnetic flux conducting pieces.
[FIG. 13B] FIG. 13B shows the result of the two-dimensional magnetic simulation carried out when the plurality of magnetic poles are located in the detection region of the power generation sensor including the I-shaped magnetic flux conducting pieces.
[FIG. 13C] FIG. 13C shows the result of the two-dimensional magnetic simulation carried out when the plurality of magnetic poles are located in the detection region of the power generation sensor including the I-shaped magnetic flux conducting pieces.
[FIG. 14A] FIG. 14A shows the result of a two-dimensional magnetic simulation carried out when magnets are located in the detection region of the power generation sensor including the L-shaped magnetic flux conducting pieces, wherein a magnetic pole pitch is shorter than in the simulation shown in FIGS. 12A to 12C.
[FIG. 14B] FIG. 14B shows the result of the two-dimensional magnetic simulation carried out when the magnets are located in the detection region of the power generation sensor including the L-shaped magnetic flux conducting pieces, wherein the magnetic pole pitch is shorter than in the simulation shown in FIGS. 12A to 12C.
[FIG. 14C] FIG. 14C shows the result of the two-dimensional magnetic simulation carried out when the magnets are located in the detection region of the power generation sensor including the L-shaped magnetic flux conducting pieces, wherein the magnetic pole pitch is shorter than in the simulation shown in FIGS. 12A to 12C.
[FIG. 15A] FIG. 15A shows the result of a two-dimensional magnetic simulation carried out when magnets are located in the detection region of the power generation sensor including the I-shaped magnetic flux conducting pieces, wherein a magnetic pole pitch is shorter than in the simulation shown in FIGS. 13A to 13C.
[FIG. 15B] FIG. 15B shows the result of the two-dimensional magnetic simulation carried out when the magnets are located in the detection region of the power generation sensor including the I-shaped magnetic flux conducting pieces, wherein the magnetic pole pitch is shorter than in the simulation shown in FIGS. 13A to 13C.
[FIG. 15C] FIG. 15C shows the result of the two-dimensional magnetic simulation carried out when the magnets are located in the detection region of the power generation sensor including the I-shaped magnetic flux conducting pieces, wherein the magnetic pole pitch is shorter than in the simulation shown in FIGS. 13A to 13C.
[FIG. 16] FIG. 16 is a diagram for describing a preferred condition for the magnetic pole pitch by way of example.
[FIG. 17] FIG. 17 is a diagram for describing another preferred condition for the magnetic pole pitch by way of example.
[FIG. 18] FIG. 18 is a plan view for describing a relationship between the size of the power generation sensor and the size of a multipole magnet in the rotary pulse signal generator.
[FIG. 19A] FIG. 19A is a perspective view of a power generation sensor according to a second example embodiment.
[FIG. 19B] FIG. 19B is a partly exploded perspective view of the power generation sensor according to the second example embodiment.
[FIG. 19C] FIG. 19C is a side view the power generation sensor according to the second example embodiment.

### DESCRIPTION OF EXAMPLE EMBODIMENTS

The present invention will hereinafter be described based on the example embodiments thereof shown in the drawings. However, it should be understood that the present invention be not limited by the following example embodiments.

### [First Example Embodiment]

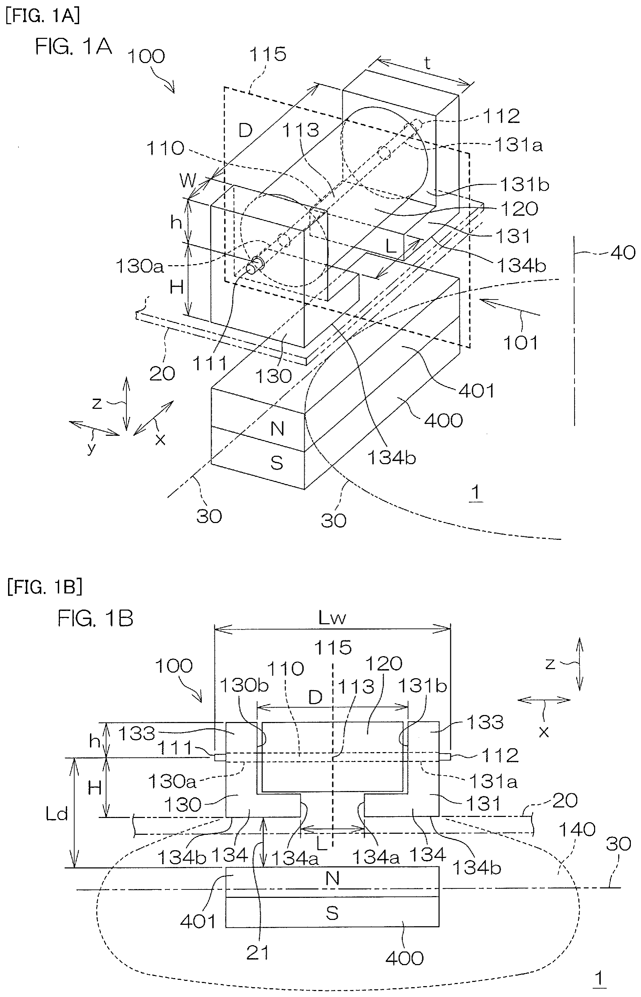

FIGS. 1A and 1B show a pulse signal generator 1 according to a first example embodiment. FIG. 1A is a perspective view of the pulse signal generator 1, and FIG. 1B is a front view as seen in an arrow direction 101 in FIG. 1A. The pulse signal generator 1 includes a power generation sensor 100 and a magnetic field generation source 400. The power generation sensor 100 and the magnetic field generation source 400 are moved relative to each other, whereby the power generation sensor 100 generates a pulse signal. The relative movement of the power generation sensor 100 and the magnetic field generation source 400 is achieved by movement of at least one of the power generation sensor 100 and the magnetic field generation source 400. Hereinafter, description will be given to an exemplary case in which the relative movement is mainly achieved by the movement of the magnetic field generation source 400.

The power generation sensor 100 includes a magnetic wire 110 that exhibits a large Barkhausen effect, a coil 120 wound around the magnetic wire 110, and a pair of magnetic flux conducting pieces 130, 131 respectively having magnetically soft components. The coil 120 is wound around the magnetic wire 110 so that a first end portion 111 and a second end portion 112 of the magnetic wire 110 having the same length are exposed from the coil 120. In this example embodiment, the coil 120 is wound around the magnetic wire 110 between the pair of magnetic flux conducting pieces 130, 131. The pair of magnetic flux conducting pieces 130, 131 are respectively magnetically coupled to the first end portion 111 and the second end portion 112 of the magnetic wire 110.

The pair of magnetic flux conducting pieces 130, 131 are configured to have substantially the same shape and substantially the same size. More specifically, the pair of magnetic flux conducting pieces 130, 131 are configured to be symmetrical with each other with respect to a symmetry plane 115 (a virtual plane to be used to describe a geometrical layout) which extends orthogonally to the axis direction x (length direction, longitudinal direction) of the magnetic wire 110 through the middle position (hereinafter referred to as "axially middle position") 113 of the magnetic wire 110 with respect to the axis direction x. The pair of magnetic flux conducting pieces 130, 131 include axis-orthogonal portions 133 extending parallel to each other from the opposite end portions 111, 112 of the magnetic wire 110 in an axis-orthogonal direction z orthogonal to the axis direction x, and axis-parallel portions 134 extending toward each other from the distal ends of the axis-orthogonal portions 133 in the axis direction x.

The opposite end portions 111, 112 of the magnetic wire 110 are respectively fixed to the proximal portions of the axis-orthogonal portions 133 of the pair of magnetic flux conducting pieces 130, 131. More specifically, the axis-orthogonal portions 133 respectively include wire placement portions 130a, 131a each provided in the proximal portion thereof in the form of hole or groove extending therethrough in the axis direction x. In FIG. 1A and the like, the wire placement portions 130a, 131a are each illustrated as a hole. Where the wire placement portions 130a, 131a are each provided in the form of groove, the groove preferably extends in the axis-orthogonal direction z to open in an end surface opposite from a detection region 140 to be described later. The first end portion 111 and the second end portion 112 of the magnetic wire 110 respectively extend through the wire placement portions 130a, 131a of the axis-orthogonal portions 133 and, in this state, are respectively fixed to the axis-orthogonal portions 133. More specifically, a resin (not shown) is provided in the holes or the grooves of the wire placement portions 130a, 131a, whereby the opposite end portions 111, 112 of the magnetic wire 110 are respectively fixed to and combined with the axis-orthogonal portions 133. Thus, the magnetic wire 110 is mechanically connected to and magnetically coupled to the pair of magnetic flux conducting pieces 130, 131.

The axis-parallel portions 134 of the pair of magnetic flux conducting pieces 130, 131 are disposed on opposite sides of the symmetry plane 115 extending through the axially middle position 113 of the magnetic wire 110 with their adjacent ends 134a opposed to each other. That is, the adjacent ends 134a of the axis-parallel portions 134 are opposed to and spaced a gap from each other in the axis direction x. The middle position of the gap between the adjacent ends 134a with respect to the axis direction x corresponds to the axially middle position 113 defined with respect to the axis direction x. Therefore, the adjacent ends 134a of the pair of axis-parallel portions 134 are spaced the same distance from the symmetry plane 115 as measured in the axis direction x. The distance L of the gap as measured in the axis direction x is 5% to 50%, preferably 20% to 40%, of a distance D between the magnetic wire connection positions of the pair of axis-orthogonal portions 133 at which the magnetic wire 110 is connected to the respective axis-orthogonal portions 133. More specifically, the distance D is a distance between the inner side surfaces 130b, 131b of the pair of magnetic flux conducting pieces 130, 131 (the inner side surfaces of the axis-orthogonal portions 133) opposed to each other in the axis direction x at the magnetic wire connection positions as measured in the axis direction x.

The power generation sensor 100 is configured so that a region located on a side of the axis-parallel portions 134 opposite from the magnetic wire 110 serves as the detection region 140. The magnetic field generation source 400, which generates a magnetic field to be detected, is placed in the detection region 140. The power generation sensor 100 and the magnetic field generation source 400 are disposed so as to be spaced from each other in the axis-orthogonal direction z with a gap 21 therebetween. The gap 21 may be a full air gap, in which a printed board 20, for example, may be provided. That is, the power generation sensor 100 may be provided on one of the opposite major surface sides of the printed board 20, and the magnetic field generation source 400 may be provided on the other major surface side of the printed board 20. Electric components and/or electronic components may be mounted on one or both of the major surfaces of the printed board 20. In one specific example, the power generation sensor 100 is mounted on the one major surface of the printed board 20.

Typically, the magnetic field generation source 400 is moved relative to the power generation sensor 100 so as to pass through the detection region 140. That is, the detection region 140 is provided on the movement path of the magnetic field generation source 400. More specifically, the magnetic field generation source 400 may include a magnet magnetized in the axis-orthogonal direction z. The magnetic field generation source 400 includes one or more magnetic poles 401 to be brought into opposed relation to the power generation sensor 100 (more specifically, the axis-parallel portions 134) when moving along a track 30 extending through the detection region 140.

Where a plurality of magnetic poles 401 are provided, these magnetic poles 401 may be constituted by a plurality of magnets, or may be constituted with the use of one or more multipole magnets. Where the magnetic field generation source 400 has the plurality of magnetic poles 401, these magnetic poles may be magnetic poles of the same polarity, or may be magnetic poles of opposite polarities. More specifically, the magnetic poles of the same polarity may be sequentially brought into opposed relation to the power generation sensor 100, or the magnetic poles of the opposite polarities may be alternately brought into opposed relation to the power generation sensor 100 by the movement of the magnetic field generation source 400. In either case, the power generation sensor 100 outputs a voltage pulse based on a magnetic field change occurring when the magnetic poles 401 are moved through the detection region. A position detection device (i.e., an encoder) can be provided, which generates positional information such as a linear position or a rotational position by counting the voltage pulse through signal processing.

The moving direction (i.e., the movement direction) of the magnetic poles 401 in the detection region 140 extends in the axis direction x. That is, the movement direction of the magnetic poles 401 is generally parallel to the magnetic wire 110. In other words, the track 30 has a track portion substantially parallel to the axis direction x in the detection region 140. In one specific example, the track 30 has a liner track portion parallel to the axis direction x in the detection region 140. The track 30 may be entirely linear or may have a curved track portion. In another specific example, the track 30 has an arcuate track portion having a tangential line parallel to the axis direction x in the detection region 140. The arcuate track portion may have a center on a center axis 40 parallel to the axis-orthogonal direction z. The track 30 may be entirely arcuate, i.e., may be circular. Further, the track 30 may have a track portion having a shape other than the arcuate shape, e.g., having a linear shape, an oval shape or the like.

The pair of magnetic flux conducting pieces 130, 131 are configured so that a magnetic field generated in a space containing the magnetic flux conducting pieces 130, 131 by the magnetic field generation source 400 present in the detection region 140 is corrected into a magnetic field directed in the axis direction x and the corrected magnetic field is applied to the magnetic wire 110.

More specifically, the magnetic flux conducting pieces 130, 131 of the magnetically soft components each include the axis-orthogonal portion 133 (having a generally parallelepiped shape) and the axis-parallel portion 134 (having a generally parallelepiped shape) connected to the distal end portion of the axis-orthogonal portion 133 opposed to the magnetic field generation source 400, i.e., adjacent to the detection region 140, and each have an L-shape bent at a right angle at a connection portion between the axis-orthogonal portion 133 and the axis-parallel portion 134. The axis-parallel portions 134 extend in the axis direction x so as to shield the magnetic wire 110, i.e., so as to shield the magnetic wire 110 from the detection region 140. The axis-parallel portions 134 of the pair of symmetrically configured magnetic flux conducting pieces 130, 131 extend to the axially middle side of the magnetic wire 110, and the adjacent ends 134a of the axis-parallel portions 134 are opposed to each other with a gap defined therebetween around the axially middle position 113 of the magnetic wire 110. The adjacent ends 134a respectively have flat surfaces orthogonal to the axis direction x. The two flat surfaces of the two adjacent ends 134a are parallel to each other, and opposed to each other in the axis direction x. The distance L of the gap between the two adjacent ends 134a as measured in the direction x is a distance between the two flat surfaces of the two adjacent ends 134a.

The magnetic flux conducting pieces 130, 131 of the magnetically soft components and the coil 120 are fixed to a case (not shown) covering the magnetic flux conducting pieces 130, 131 and the coil 120 by an adhesive resin, fitting engagement or other proper fixture means. As described above, the opposite end portions 111, 112 of the magnetic wire 110 are respectively fixed to the wire placement portions 130a, 131a each having the hole or the groove extending therethrough with the resin (not shown). Thus, the power generation sensor 100 has a structure such that the pair of magnetic flux conducting pieces 130, 131, the coil 120 and the magnetic wire 110 are fixed to each other to be unified.

The opposite ends of the coil 120 may be respectively connected to external electrodes provided in the axis-parallel portions 134. The power generation sensor 100 may be surface-mounted on the printed board 20 by connecting the external electrodes to a wiring conductor provided on the one major surface of the printed board 20.

### [Models]

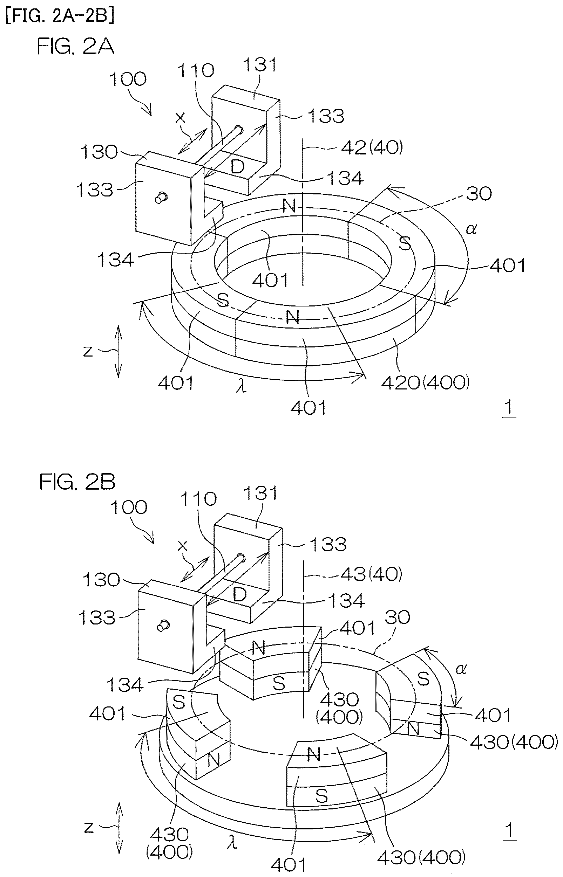

FIGS. 2A and 2B show models of the rotary pulse signal generator 1 employing the power generation sensor 100. The pulse signal generator 1 includes a magnet 420 or magnets 430 to be rotated about a rotation axis 42 or 43, and the power generation sensor 100 disposed with its axis direction x extending orthogonally to the rotation axis 42 or 43. In FIGS. 2A and 2B, however, the coil 120 of the power generation sensor 100 (see FIGS. 1A and 1B) is not shown. The magnetic wire 110 is spaced from the magnet 420 or the magnets 430 in a direction parallel to the rotation axis 42 or 43. Further, the magnetic wire 110 is offset radially from the rotation axis 42, 43. The rotation axis 42, 43 is parallel to the axis-orthogonal direction z.

In this example, the magnet 420 or the magnets 430 including four magnetic poles 401, i.e., two N-poles and two S-poles, to be moved through the detection region 140 of the power generation sensor 100 serve as the magnetic field generation source 400.

In an arrangement shown in FIG. 2A, the magnetic field generation source 400 is constituted by a ring-shaped magnet 420 having four magnetic pole regions, i.e., N-pole regions and S-pole regions alternately circumferentially arranged in a surface thereof opposed to the power generation sensor 100. The magnet 420 may be configured in a ring shape having a diameter that is smaller than the overall length Lw of the magnetic wire 110 (see FIG. 1B). The magnetization directions are parallel to the rotation axis 42 and, therefore, are parallel to the axis-orthogonal direction z. The ring-shaped magnet 420 is rotatable about the rotation axis 42 (which aligns with the center axis thereof), whereby an alternating magnetic field is generated in the detection region 140 of the power generation sensor 100. The plurality of magnetic poles 401, which are moved along the circular track 30 about the center axis 40 aligning with the rotation axis 42, are defined by the four magnetic pole regions of the magnet 420.

In an arrangement shown in FIG. 2B, the magnetic field generation source 400 is constituted by four separate magnets 430. The magnetization directions are parallel to the rotation axis 43 and, therefore, are parallel to the axis-orthogonal direction z. The four magnets 430 are arranged circumferentially about the rotation axis 43 and, for example, are permanent magnets having the same shape and the same size and arranged circumferentially equidistantly. The four magnets 430 can be regarded as being configured in a ring shape as a whole. The diameter of the ring shape may be shorter than the overall length Lw of the magnetic wire 110. The four magnets 430 are rotatable about the rotation axis 43 while maintaining their relative positions about the rotation axis 43. The magnets 430 are arranged with their magnetization directions kept parallel to the rotation axis 43. The four magnets 430 are disposed with the N-poles and the S-poles thereof alternately arranged in the rotation direction on a side thereof opposed to the power generation sensor 100. Therefore, when the four magnets 430 are rotated circumferentially about the rotation axis 43, the N-poles and the S-poles are alternately brought into opposed relation to the power generation sensor 100, whereby the alternating magnetic field is generated in the detection region 140 of the power generation sensor 100. The magnetic poles of the four magnets 430 on the side opposed to the power generation sensor 100 serve as the magnetic poles 401 that are moved along the circular track 30 defined about the center axis 40 aligning with the rotation axis 43.

The magnetic pole regions of the ring-shaped magnet 420 shown in FIG. 2A each have a circumferential length (α) that is equal to a magnetic pole pitch λ as measured from the circumferentially middle position of an N-pole region to the circumferentially middle position of an S-pole region. The magnetic poles of the separate magnets shown in FIG. 2B each have a circumferential length (α) that is shorter than a magnetic pole pitch λ as measured circumferentially between the circumferentially middle positions of each two adjacent magnets.

The power generation sensor 100 is disposed with its magnetic wire 110 radially offset from the rotation axis 42 or 43 of the magnet 420 or the magnets 430. That is, the magnetic wire 110 is offset from the rotation path of the magnet 420 or the magnets 430 to a position at which the magnetic wire 110 is opposed to the magnet 420 or the magnets 430 in the direction parallel to the rotation axis 42 or 43 (in the axis-orthogonal direction z). The power generation sensor 100 is disposed so that the axis direction x of the magnetic wire 110 thereof extends along a tangential line of a virtual circle defined about the rotation axis 42 or 43 and the detection region 140 (see FIG. 1B) thereof is located on the side of the magnet 420 or the magnets 430. In either of the arrangements shown in FIGS. 2A and 2B, the magnetic pole pitch λ is set not greater than the distance D between the axis-orthogonal portions 133 of the magnetic flux conducting pieces 130, 131.

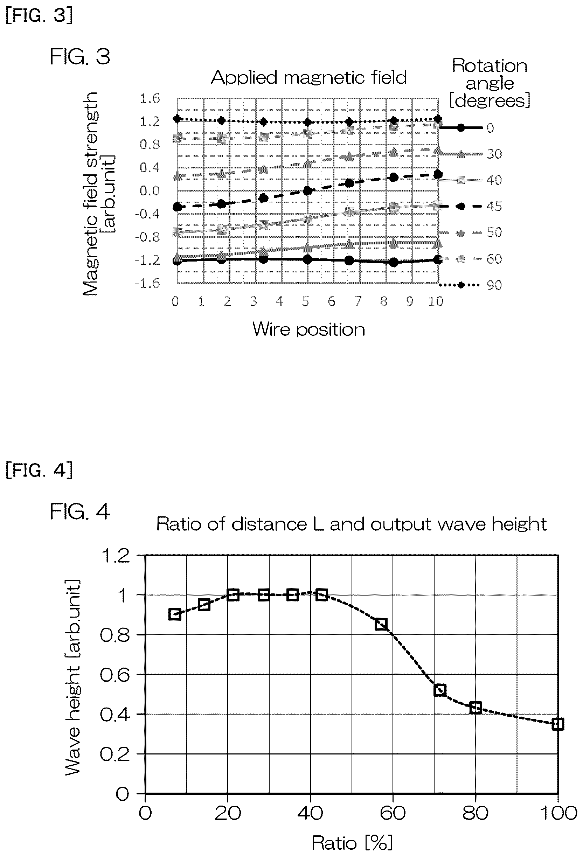

FIG. 3 shows the result of a three-dimensional magnetic simulation carried out on the arrangement shown in FIG. 2B. In FIG. 3, a magnetic field applied to the magnetic wire 110 when the four magnets 430 are rotated to different rotation angles about the rotation axis 43 is shown in the form of graph. The wire position on the abscissa indicates the positions of different parts of the magnetic wire 110 along the axis direction x. In the arrangement shown in FIG. 2B, specifically, a magnetic wire portion between the two inner side surfaces 130b, 131b of the axis-orthogonal portions 133 of the two magnetic flux conducting pieces 130, 131 opposed to each other in the axis direction x (see FIG. 1B) is equally divided into ten magnetic wire sections, and the position of a magnetic wire section located at one of opposite ends of the magnetic wire portion is denoted by "0" and the position of a magnetic wire section located at the other end of the magnetic wire portion is denoted by "10." A rotation angle observed in a state shown in FIG. 2B is defined as 0 degree, and a rotation angle observed after rotation by the magnetic pole pitch λ is defined as 90 degrees.

The result of the magnetic simulation shown in FIG. 3 is obtained for a rotation angle range of the first quadrant, i.e., a rotation angle range of 0 degrees to 90 degrees. In the rotation angle range of the first quadrant, a stabilization magnetic field that can bring about a preparatory state (a set state before a plus signal is outputted) in which the magnetization directions of a hard layer and a soft layer are consistent, and an operational magnetic field that can reverse the magnetization direction of the soft layer to cause the hard layer and the soft layer to have opposite magnetization directions (to output a minus signal) are confirmed. The magnetic field strength is standardized so that the stabilization magnetic field has a magnetic field strength of not lower than |±1|. The operational magnetic field is about ±0.5. At wire positions at which the magnetic field strength (of the stabilization magnetic field) is not higher than -1.0 (with an absolute value of not less than 1) in FIG. 3, the magnetization directions of both the hard layer and the soft layer can be reversed. At wire positions at which the magnetic field strength (of the operational magnetic field) is not higher than -0.5 (with an absolute value of not less than 0.5) in FIG. 3, the magnetization direction of the soft layer can be reversed. At wire positions at which the magnetic field strength is not higher than -0.5 and higher than -1.0 (with an absolute value of not less than 0.5 and less than 1.0), the magnetization direction of the soft layer can be reversed, but the magnetization direction of the hard layer cannot be reversed.

FIG. 3 indicates that there is no substantial difference in the magnetic field strength at positions adjacent to the opposite ends of the magnetic wire 110 and in the axially middle portion of the magnetic wire 110 for all the rotation angles. This indicates that the magnetic field applied to the magnetic wire 110 is parallel to the axis direction x of the magnetic wire 110 over the entire length of the magnetic wire 110 for any of the rotation angles. In other words, the magnetic field generated by any of the magnets 430 is corrected into a magnetic field directed parallel to the axis direction x of the magnetic wire 110, and the corrected magnetic field is applied to the magnetic wire 110.

Further, FIG. 3 indicates that a stabilization magnetic field on a minus side (having a magnetic field strength of not higher than -1 (with an absolute value of not less than 1)), a stabilization magnetic field on a plus side (having a magnetic field strength of not lower than +1), an operational magnetic field on the minus side (having a magnetic field strength of not higher than -0.5 (with an absolute value of not less than 0.5)), and an operational magnetic field on the plus side (having a magnetic field strength of not lower than +0.5) are applied during a rotational movement during which the rotation angle is changed from 0 degree to 90 degrees. In other words, the set state (preparatory state) in which the magnetization directions of the hard layer and the soft layer are consistent before a plus signal is outputted, a state in which the operational magnetic field is applied in the set state to reverse only the magnetization direction of the soft layer to output the plus signal, and a set state (preparatory state) in which the magnetization directions of the hard layer and the soft layer are consistent before a minus signal is outputted are achieved during the rotational movement during which the rotation angle is changed from 0 degree to 90 degrees. Further, a state in which the operational magnetic field is applied in the set state to reverse only the magnetization direction of the soft layer to output the minus signal is achieved by a rotational movement during which the rotation angle is changed from 90 degrees to 180 degrees. Thus, the original state is restored. Therefore, two plus signal pulses and two minus signal pulses, i.e., a total of four signal pulses, are outputted, while the four magnets 430 make one turn (360-degree turn) about the rotation axis 43. Though not shown, the result of a three-dimensional magnetic simulation carried out on the arrangement shown in FIG. 2A is substantially the same as that shown in FIG. 3.

Even the models in which the magnetic field generation source 400 includes the magnet 420 or the magnets 430 of the multipole structure can achieve a magnetic field correcting function such that the alternating magnetic field generated in the detection region 140 by the movement of the magnetic field generation source 400 is corrected into the magnetic field directed in the axis direction x of the magnetic wire 110. Though not shown, a model in which the magnetic field generation source 400 includes a dipole magnet can also achieve the same function.

Next, description will be given to a relationship of the distance D between the magnetic wire connection positions of the two magnetic flux conducting pieces 130, 131 as measured in the axis direction x versus the gap (distance L) between the two magnetic flux conducting pieces 130, 131 opposed to each other at a position offset from the magnetic wire 110 toward the detection region 140. Specifically, the distance D is a distance between the inner side surfaces 130b, 131b of the pair of axis-orthogonal portions 133 opposed to each other as measured in the axis direction x. Specifically, the distance L is a distance between the adjacent ends 134a of the pair of axis-parallel portions 134 as measured in the axis direction x. Since the magnetic flux conducting pieces 130, 131 are symmetrical in shape with respect to the symmetry plane 115 extending through the axially middle position 113 of the magnetic wire 110, the pair of adjacent ends 134a are opposed to each other with the symmetry plane 115 interposed therebetween as seen from the detection region 140 (see FIG. 1B).

Hereinafter, description will be given to the result of an experiment carried out on the ratio of the distance L between the adjacent ends 134a of the axis-parallel portions 134 to the distance D between the axis-orthogonal portions 133.

For the arrangement of the model described above (see FIG. 2B), a relationship of the wave height of a pulse signal outputted from the coil 120 versus the ratio of the distance L between the adjacent ends 134a to the distance D between the magnetic wire connection positions of the magnetic flux conducting pieces 130, 131 was checked. The result of the check is shown in FIG. 4. In FIG. 4, the abscissa indicates the ratio (%) of the distance L to the distance D, and the ordinate indicates the wave height. The output wave height is standardized with its maximum value defined as 1. The wave height of the pulse signal is determined as an average of the absolute values of the wave heights of two positive and negative pulses outputted when the magnets 430 are rotated in a forward rotation direction and the absolute values of the wave heights of two positive and negative pulses outputted when the magnets 430 are rotated in a reverse rotation direction.

FIG. 4 indicates that the magnetic wire 110 can exhibit 100% of its intrinsic large Barkhausen effect when the ratio is about 20% to about 45%. Where the ratio is about 5%, the large Barkhausen effect is reduced by several percents from the intrinsic large Barkhausen effect of the magnetic wire 110. This is supposedly because the gap (distance L) between the adjacent ends 134a of the axis-parallel portions 134 is smaller and the large Barkhausen effect is influenced by a magnetic path extending through this smaller gap. Where the ratio is higher than about 50%, the large Barkhausen effect is less than the intrinsic large Barkhausen effect of the magnetic wire 110. This is supposedly because the surface areas of the magnetically soft components opposed to the magnets 430 are reduced. That is, an area of the magnetic wire 110 shielded from the magnets 430 by the axis-parallel portions 134 of the magnetic flux conducting pieces 130, 131 is reduced, whereby the large Barkhausen effect is influenced by the reduction in the shielding effect described above.

Where the ratio is in a range of 5% to 50%, the magnetic wire 110 can exhibit not less than 90% of its intrinsic large Barkhausen effect. Further, where the ratio is in a range of 20% to 40%, the magnetic wire 110 can exhibit 100% of its intrinsic large Barkhausen effect.

As described above, the magnetic flux conducting pieces 130, 131 of the magnetically soft components have the function of correcting the alternating magnetic field generated in the detection region 140 by the magnetic field generation source into the magnetic field directed in the axial direction x of the magnetic wire 110 and applying the corrected magnetic field to the magnetic wire 110. Thus, a signal induced in the coil 120 wound around the magnetic wire 110 has a higher output power. The power generation sensor 100 including the magnetic flux conducting pieces 130, 131 unified therewith and having the magnetic field correcting function can be applied to various detection media.

The ratio of the distance L between the adjacent ends 134a opposed to each other at the position offset from the magnetic wire 110 toward the detection region 140 to the distance D between the magnetic wire connection positions of the pair of magnetic flux conducting pieces 130, 131 is defined in the aforementioned range, whereby the magnetic flux conducting pieces 130, 131 provide an excellent magnetic field correcting function as described above. Even if the magnetic wire 110 has a different axial length, it is merely necessary to design the power generation sensor 100 so as to satisfy the requirement for the range of the ratio. This facilitates the shape design of the magnetic flux conducting pieces 130, 131.

In the example shown in FIGS. 1A and 1B, the first end portion 111 and the second end portion 112 of the magnetic wire 110 are respectively exposed from the magnetic flux conducting pieces 130, 131 of the magnetically soft components. However, the first end portion 111 and the second end portion 112 are not necessarily required to be respectively exposed from the magnetic flux conducting pieces 130, 131. Where the first end portion 111 and the second end portion 112 are exposed, the first end portion 111 and the second end portion 112 may project or may not project from the magnetic flux conducting pieces 130, 131, respectively, in the axis direction x. Where the first end portion 111 and the second end portion 112 project, their projection lengths are not limited. The diameter of each of the holes or the width of each of the grooves of the wire placement portions 130a, 131a extending through the magnetic flux conducting pieces 130, 131 of the magnetically soft components in the axis direction x is preferably a hole diameter or a groove width that substantially permits the sliding (sliding contact) of the magnetic wire 110 without application of any stress to the magnetic wire 110 in use. Specifically, the hole diameter or the groove width may be set greater by several percents than the diameter of the magnetic wire 110.

The wire placement portions 130a, 131a are preferably disposed on a side of the magnetic flux conducting pieces 130, 131 not opposed to the magnetic field generation source, i.e., are preferably offset away from the detection region 140, when the magnetic flux conducting pieces 130, 131 are viewed in the axis direction x. That is, as shown in FIG. 1A, a distance h from the magnetic wire 110 to an end of each of the axis-orthogonal portions 133 (opposite from the detection region 140) and a distance H from the magnetic wire 110 to each of the detection region opposition surfaces 134b of the magnetic flux conducting pieces 130, 131 preferably satisfy a relationship h < H. More preferably, by substantially equalizing the distance h to the radius of the coil 120, the length h+H of each of the magnetic flux conducting pieces 130, 131 as measured in the axis-orthogonal direction z is reduced, so that the size of the power generation sensor 100 as measured in the axis-orthogonal direction z can be reduced. Further, where the width t of each of the magnetic flux conducting pieces 130, 131 is substantially equal to the diameter of the coil 120 when the magnetic flux conducting pieces 130, 131 are viewed in the axis direction x, the size of the power generation sensor 100 as measured in a widthwise direction y can be reduced. Thus, the power generation sensor 100 can have a reduced size.

The magnetically soft components for the magnetic flux conducting pieces 130, 131 are each preferably formed of a magnetic material having a higher magnetic permeability (e.g., not less than 500) and a coercivity that is not greater than that of the magnetic wire 110. Specifically, preferred examples of the magnetic material include a Ni-ferrite-containing material and a Mn-ferrite-containing material. These materials have excellent characteristic properties, e.g., lower hysteresis, lower self-inductance, lower iron loss and the like and, therefore, are advantageous in that the output characteristics are not influenced even if a highfrequency alternating magnetic field generated when the magnetic field generation source is moved at a higher speed is applied to the power generation sensor 100.

If the length of the hole formed as extending through the magnetic flux conducting piece 130, 131, i.e., the thickness W of the axis-orthogonal portion 133 (see FIG. 1A), is excessively great, the length of a space in which the coil 120 is disposed is reduced to thereby reduce the pickup efficiency of the large Barkhausen effect of the magnetic wire 110. If the hole length is excessively small, the magnetic path is narrower. Therefore, the thickness W is preferably 10% to 20% of the overall length of the magnetic wire 110 according to the teaching of the experiment.

### [Specific example of first example embodiment]

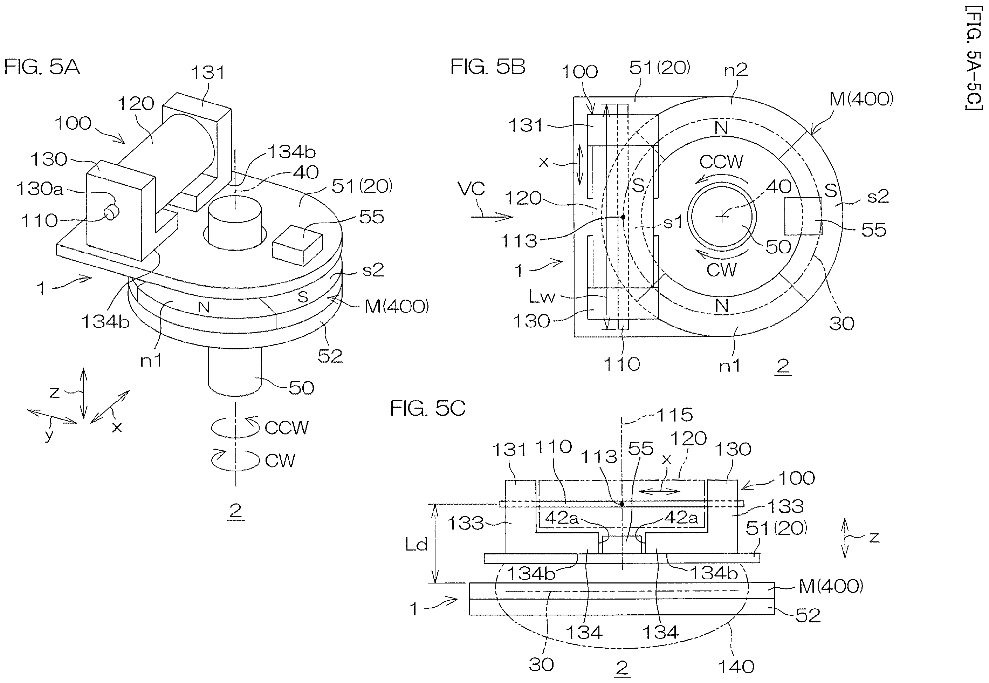

FIG. 5A is a perspective view for describing the structure of a rotation detection device 2 including the rotary pulse signal generator 1 of the model described above by way of specific example, and FIG. 5B is a plan view of the rotation detection device 2. FIG. 5C is a front view as seen in an arrow direction VC in FIG. 5B. The rotation detection device 2 is an example of the encoder, and is adapted to detect a rotational position about the center axis 40 (rotation axis) of a rotation shaft 50. In this example, the rotation detection device 2 includes the pulse signal generator 1 and a sensor element 55 (e.g., a magnetic sensor). Though not shown, the rotation detection device 2 may further include a counting circuit that counts output pulses generated by the pulse signal generator 1 through signal processing, and a nonvolatile memory that stores the result of the counting by the counting circuit. The counting circuit may be configured to perform a counting operation in consideration of the output of the sensor element 55.

The pulse signal generator 1 includes the power generation sensor 100 and the magnetic field generation source 400. The power generation sensor 100 is disposed on a first support 51, and supported by the first support 51. In this example embodiment, the sensor element 55 is also mounted on the first support 51.

The magnetic field generation source 400 is fixed to a second support 52. The second support 52 is movable relative to the first support 51. Specifically, the second support 52 is combined with (fixed to) the rotation shaft 50, and is rotatable together with the rotation shaft 50 about the center axis 40 (rotation axis). Therefore, the second support 52 may be a part of the rotating body. In contrast, the first support 51 is stationary to be held in a nonrotatable state. Thus, the magnetic field generation source 400 is rotatable together with the second support 52 about the center axis 40 to be thereby moved relative to the first support 51.

The rotation shaft 50 is typically rotated by a driving force applied from the drive shaft of an electric motor (not shown). Where the electric motor is driven in opposite directions, the rotation shaft 50 is correspondingly rotated in opposite directions, i.e., in a counterclockwise direction CCW and in a clockwise direction CW. The first support 51 may be the printed board 20 (see FIGS. 1A and 1B) disposed in a plane orthogonal to the center axis 40.

In this example, the magnetic field generation source 400 is constituted by a ring-shaped multipole magnetization magnet M (in the illustrated example, a four-pole magnetization magnet) surrounding the center axis 40. The magnetization direction is parallel to the center axis 40, i.e., the axis-orthogonal direction z. The four-pole magnetization magnet M includes k N-poles n1, n2, ..., nk and k S-poles s1, s2, ..., sk (wherein k is a natural number, preferably k ≥ 2 and, in the illustrated example, k = 2), and is configured so that k magnetic pole pairs (k pairs of N-poles and S-poles) are disposed circumferentially about the center axis 40 with their N-poles and S-poles alternately arranged as seen along the rotation axis 40 from one side. The magnetic poles n1, n2, ..., nk; s1, s2, ..., sk respectively extend in angular ranges defined about the center axis 40 as each having an angle of 360 degrees/2k (90 degrees in this example embodiment). Thus, the second support 52 is rotated together with the rotation shaft 50 and the magnetic field generation source 400 is correspondingly rotated about the center axis 40 (rotation axis), whereby a k-cycle alternating magnetic field (two-cycle alternating magnetic field in the illustrated example) is applied to the power generation sensor 100.

The power generation sensor 100 is mounted on one of the major surfaces of the first support 51 (printed board 20). The magnetic wire 110 of the power generation sensor 100 is located on the tangential line of the circle defined about the center axis 40, and the axially middle position 113 of the magnetic wire 110 is present on the contact point of the tangential line. The power generation sensor 100 is disposed so that, when the center of any one of the magnetic poles n1, n2, ..., nk; s1, s2, ..., sk extending in the angular ranges defined about the center axis 40 as each having an angle of 360 degrees/2k (90 degrees in this example embodiment) coincides with the axially middle position 113 of the magnetic wire 110, magnetic fluxes conducted through the two magnetic flux conducting pieces 130, 131 are balanced with each other. For example, the coil 120 generates a negative voltage pulse in a first state in which a magnetic flux from the N-pole n1, n2, ..., nk is conducted through one 131 of the magnetic flux conducting pieces 130, 131, and generates a positive voltage pulse in a second state in which the magnetic flux from the N-pole n1, n2, ..., nk is conducted through the other magnetic flux conducting piece 130.

The axis-parallel portions 134 of the magnetic flux conducting pieces 130, 131 respectively have detection region opposition surfaces 134b disposed on a detection region side in opposed relation to the detection region 140. The detection region opposition surfaces 134b are flat surfaces parallel to the axis direction x. The detection region opposition surfaces 134b respectively serve as magnetic flux conducting ends that, when any one of the magnetic poles is located in the detection region 140, guide a magnetic flux from that magnetic pole into the magnetic flux conducting pieces 130, 131.

The axis-parallel portions 134 of the magnetic flux conducting pieces 130, 131 are joined with a wiring pattern (not shown) formed on the one major surface of the first support 51 (printed board 20), whereby the power generation sensor 100 is surface-mounted on the first support 51 (printed board 20). The power generation sensor 100 is disposed so that the axis direction x of the magnetic wire 110 extends along the tangential line of the circle defined about the center axis 40 through a certain point (contact point) present on the circle, and the axially middle position 113 of the magnetic wire 110 coincides with the contact point. The detection region 140 of the power generation sensor 100 is located on a side of the axis-parallel portions 134 opposite from the magnetic wire 110 and, in this example, is a region adjacent to the other major surface of the first support 51 (printed board 20).

In this example, the second support 52 is configured in an annular shape surrounding the center axis 40. More specifically, the second support 52 is constituted by an annular plate, and is disposed in a plane orthogonal to the center axis 40 and parallel to the first support 51 (printed board 20). The magnet M is fixed to a surface of the second support 52 opposed to the other major surface of the first support 51 (printed board 20). In this example embodiment, the magnetic poles n1, s1, n2, s2, ..., nk, sk of the magnet M are equidistantly arranged circumferentially about the center axis 40. In the illustrated specific example, the magnet M is fixed to the second support 52 with its four magnetic poles n1, s1, n2, s2 arranged at an angular pitch of 90 degrees about the center axis 40 and opposed to the first support 51 (printed board 20). A distance from the center axis 40 to the center of each of the magnetic poles n1, s1, n2, s2, ..., nk, sk may be equal to a distance from the center axis 40 to the axially middle position 113 of the magnetic wire 110. That is, the magnetic wire 110 and the magnetic poles n1, s1, n2, s2, ..., nk, sk are located on circles having the same radius about the center axis 40, as seen in plan along the center axis 40, to be thereby arranged in a positional relationship such that the magnetic poles n1, s1, n2, s2, ..., nk, sk can be opposed to the magnetic wire 110 in a direction parallel to the center axis 40. The second support 52 is preferably a yoke composed of a magnetically soft component.

As the second support 52 is rotated together with the rotation shaft 50 about the center axis 40 (rotation axis), the magnetic poles n1, s1, n2, s2, ..., nk, sk are moved on the circular track 30 extending through the detection region 140 about the center axis 40. The axis direction x of the magnetic wire 110 is parallel to a tangential line of the circular track 30 extending through a certain point (contact point) present on the circular track 30, and the axially middle position 113 is present on a perpendicular line extending through the contact point perpendicularly to the tangential line (in this example, a perpendicular line parallel to the center axis 40). In other words, the axially middle position 113 of the magnetic wire 110 is located at a certain point (contact point) present on a circle defined about the center axis 40 and having the same radius as the circular track 30, and the magnetic wire 110 extends along a tangential line of the circle extending through the contact point.

A distance between the first support 51 and the second support 52 as measured along the center axis 40 is set to a proper value that permits the magnetic poles n1, s1, n2, s2, ..., nk, sk to enter the detection region 140 of the power generation sensor 100 by the rotation of the second support 52.

The sensor element 55 (e.g., magnetic sensor) is also mounted on the major surface of the first support 51 (printed board 20) mounted with the power generation sensor 100. Further, the counting circuit and the nonvolatile memory described above and other electric or electronic components may be mounted on the major surface of the printed board 20.

The sensor element 55 is disposed so that the polarity of any one of the magnetic poles opposed to the middle portion of the power generation sensor 100 can be detected. The sensor element 55 is, for example, a magnetic sensor such as a Hall IC, and is configured to output an H-signal when detecting any one of the N-poles (with the other N-pole opposed to the middle portion of the power generation sensor 100) and to output an L-signal when detecting any one of the S-poles (with the other S-pole opposed to the middle portion of the power generation sensor 100). Thus, the sensor element 55 determines the polarity of the magnetic pole passing through the vicinity of the sensor element 55 and, as a result, outputs an identification signal identifying the polarity of the magnetic pole opposed to the middle portion of the power generation sensor 100. In this example embodiment, the sensor element 55 is disposed so as to detect one of the magnetic poles at a position having a phase difference of 180 degrees about the center axis 40 with respect to the power generation sensor 100, i.e., at a position symmetrical to the power generation sensor 100 about the center axis 40. Where k is an even number (e.g., 2), the sensor element 55 detects a magnetic pole having the same polarity as that of the magnetic pole opposed to the middle portion of the power generation sensor 100. Where k is an odd number (e.g., 3), the sensor element 55 detects a magnetic pole having a polarity opposite to that of the magnetic pole opposed to the middle portion of the power generation sensor 100. In either case, the sensor element 55 can detect the polarity of the magnetic pole opposed to the middle portion of the power generation sensor 100.

With this arrangement, one negative pulse and one positive pulse are sequentially generated, every time one magnetic pole pair n1, s1; n2, s2; ...; nk, sk passes through the detection region 140 along the circular track 30 by the rotation about the center axis 40 (rotation axis) in the counterclockwise direction CCW. Further, one positive pulse and one negative pulse are sequentially generated, every time one magnetic pole pair n1, s1; n2, s2; ...; nk, sk passes through the detection region 140 along the circular track 30 by the rotation about the center axis 40 (rotation axis) in the clockwise direction CW. The rotational position and the rotation direction can be identified based on these pulses and the identification signal (indicating the polarity of the magnetic pole located on the circular track 30 between the magnetic flux conducting pieces 130, 131) outputted by the sensor element 55.

In the specific example shown in FIGS. 5A to 5C, the magnetic field generation source 400 is constituted by the ring-shaped four-pole magnetization magnet M when k = 2. In a prototype produced by the applicant, the magnetic wire 110 has an overall length Lw of 11 mm; the ring-shaped magnet M has a diameter of 12 mm; and a distance Ld from the axially middle position 113 of the magnetic wire 110 to the surface of the ring-shaped magnet M is 4 mm (which is 36% of the overall length Lw of the magnetic wire 110).

If the rotation shaft 50 is not required to extend through the magnet, a disk-shaped magnet may be used instead of the ring-shaped magnet M.

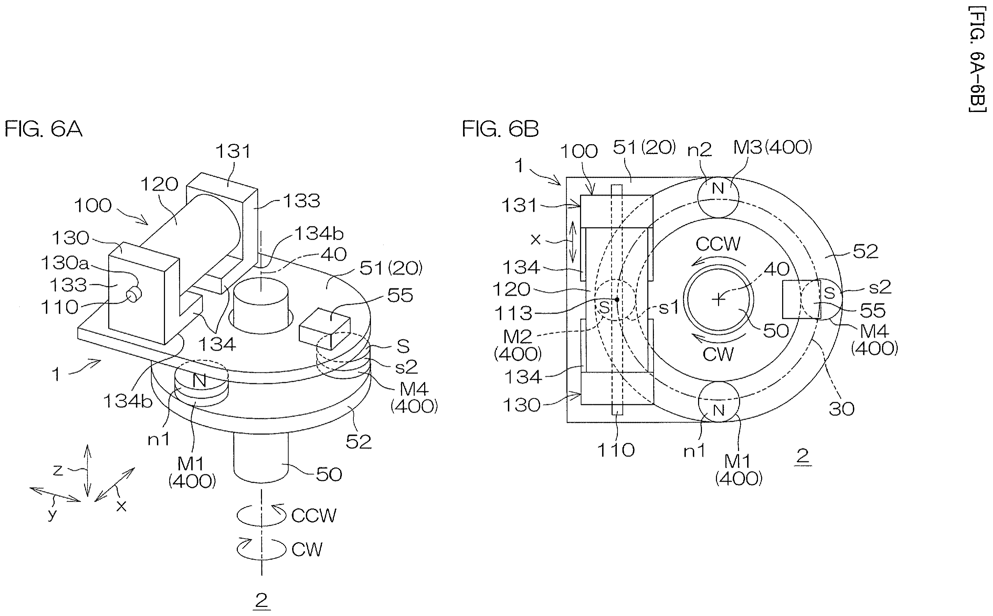

FIGS. 6A and 6B show another exemplary structure. In FIGS. 6A and 6B, components corresponding to those shown in FIGS. 5A and 5B will be denoted by the same reference characters as in FIGS. 5A and 5B. This exemplary structure is different in the structure of the magnetic field generation source from the exemplary structure shown in FIGS. 5A to 5C. While the magnetic field generation source 400 is constituted by the single ring-shaped multipole magnetization magnet M in the exemplary structure shown in FIGS. 5A to 5C, a plurality of separate magnets, i.e., 2k separate magnets M1, M2, ... (in the illustrated example, k = 2), fixed to the second support 52 are used in the exemplary structure shown in FIGS. 6A and 6B to achieve the same function as achieved by the structure shown in FIG. 5A and the like. The separate magnets M1, M2, ... are magnetized in the direction parallel to the center axis 40, i.e., in the axis-orthogonal direction z, and are arranged equiangularly about the center axis 40. The N-poles and the S-poles are alternately arranged circumferentially as seen in plan in the direction parallel to the center axis 40 (see FIG. 6B). That is, the second support 52 is rotated in one direction about the center axis 40 (rotation axis), whereby the N-poles and the S-poles alternately enter the detection region 140 of the power generation sensor 100 (see FIG. 5C) and the alternating magnetic field is generated in the vicinity of the power generation sensor 100. From the viewpoint of the productivity, the structure employing the single multipole magnet as shown in FIGS. 5A to 5C is more advantageous than the structure employing the separate magnets M1, M2, ... required to be fixed to the second support 52 as shown in FIGS. 6A and 6B.

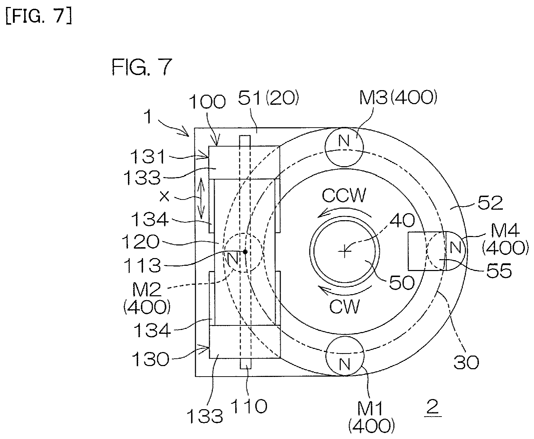

As described above, the structure may be configured so that the magnetic poles of the same polarity are brought into opposed relation to the power generation sensor 100. In this case, as shown in FIG. 7 which is a plan view as seen from the same viewpoint as in FIG. 6B, it is merely necessary to fix the separate magnets M1, M2, ... to the second support 52 so that the magnetic poles of the same polarity (N-poles in the illustrated example) are brought into opposed relation to the power generation sensor 100 in the detection region 140 (see FIG. 5C). As the second support 52 is rotated in one direction about the center axis 40 (rotation axis), the magnetic poles of the same polarity arranged in spaced relation sequentially enter the detection region 140. Thereby, one-direction magnetic fields are moved in the vicinity of the detection region 140. As a result, the alternating magnetic field is applied to the magnetic wire 110, and the power generation sensor 100 correspondingly generates voltage pulses. In this case, the number of the magnetic poles is not necessarily required to be an even number, but an odd number of magnetic poles having the same polarity may be equidistantly arranged circumferentially about the center axis.

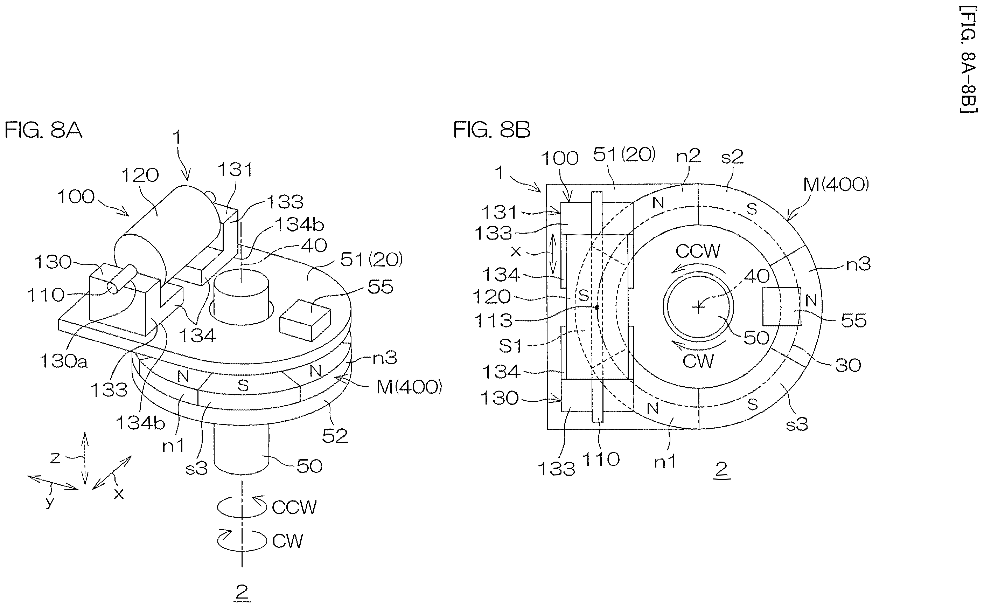

FIGS. 8A and 8B show further another exemplary structure. In FIGS. 8A and 8B, components corresponding to those shown in FIGS. 5A and 5B will be denoted by the same reference characters as in FIGS. 5A and 5B. This exemplary structure is different in the structure of the magnetic field generation source 400 from the exemplary structure shown in FIG. 5A and the like. In the structure shown in FIGS. 5A to 5C, specifically, the magnetic field generation source 400 is constituted by the multipole magnet (four-pole magnet) M having four magnetic poles equidistantly arranged circumferentially about the center axis 40. In the exemplary structure shown in FIGS. 8A and 8B, in contrast, the magnetic field generation source 400 is constituted by a multipole magnet (six-pole magnet) M including six magnetic poles equidistantly arranged circumferentially about the center axis 40, and is an example in which k = 3.

Further, this exemplary structure is different in the structure of the magnetic flux conducting pieces 130, 131, specifically, in the structure of the axis-orthogonal portions 133. More specifically, the axis-orthogonal portions 133 each only have a portion extending from the magnetic wire 110 toward the detection region 140, i.e., toward the magnetic field generation source 400, but do not have a portion extending from the magnetic wire 110 away from the detection region 140, i.e., away from the magnetic field generation source 400. Even with this arrangement, the magnetic field collected by the axis-parallel portions 134 is guided to the opposite ends of the magnetic wire 110 through the axis-orthogonal portions 133. Therefore, the coil 120 can generate the pulse signal in the same manner as in the structure shown in FIGS. 5A to 5C. The structure of the magnetic flux conducting pieces 130, 131 shown in FIGS. 8A and 8B is also applicable to the structures shown in FIGS. 5A to 5C, FIGS. 6A and 6B and FIG. 7.

Like the prototype produced by employing the four-pole magnet described above, a prototype can be operated with a design such that: the magnetic wire 110 has an overall length Lw of 11 mm; the ring-shaped magnet M has a diameter of 12 mm; and a distance Ld from the axially middle position 113 of the magnetic wire 110 to the surface of the ring-shaped magnet M is 4 mm (which is about 36% of the overall length of the magnetic wire). That is, the resolution can be increased by increasing the number of the magnetic poles substantially without the need to change the design of the power generation sensor 100 and to increase the size of the ring-shaped magnet M.

If the ring-shaped magnet M has an outer diameter of at least about 8 mm in either of the structure shown in FIGS. 5A to 5C and the structure shown in FIGS. 8A and 8B, the axis-parallel portions 134 of the magnetic flux conducting pieces 130, 131 at least partly overlap any one of the magnetic poles (the ring-shaped magnet M) as seen in plan along the center axis 40. Thus, the alternating magnetic field can be generated in the detection region 140, whereby the power generation sensor 100 can generate the voltage pulse.

### [Comparison between L-shaped magnetic flux conducting pieces and I-shaped magnetic flux conducting pieces]

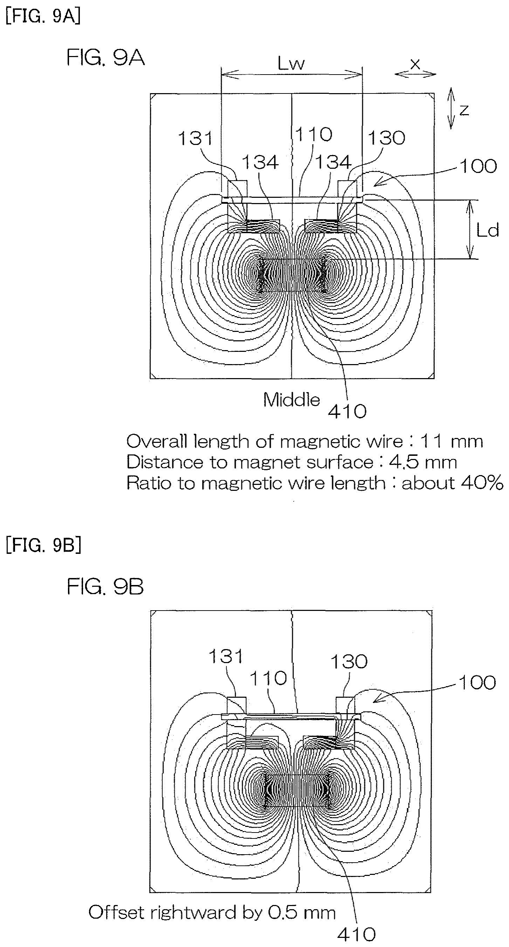

FIGS. 9A and 9B show the result of a two-dimensional magnetic simulation carried out when a magnet 410 is located in the detection region of the power generation sensor 100. The magnet 410 is magnetized in the axis-orthogonal direction z, and the magnetic poles of the magnet 410 are arranged so that the N-pole is opposed to the power generation sensor 100 and the S-pole is opposite from the power generation sensor 100. The overall length Lw of the magnetic wire 110 is 11 mm, and the distance Ld from the surface of the magnet 410 to the axially middle position of the magnetic wire 110 (the middle position with respect to the axis direction x) is 4.5 mm. In this case, the ratio Ld/Lw of the distance Ld to the overall length Lw of the magnetic wire is about 40%.

FIG. 9A shows magnetic fluxes observed when the magnet 410 is opposed to the axially middle position of the magnetic wire 110, i.e., when the magnet 410 is located in the middle portion of the detection region of the power generation sensor 100. When the magnet 410 is located in the middle portion, as shown in FIG. 9A, magnetic fluxes entering the pair of magnetic flux conducting pieces 130, 131 are balanced and, therefore, do not pass through the magnetic wire 110. A magnetic flux directed from the magnet 410 toward the axially middle portion of the magnetic wire 110 is blocked by the axis-parallel portions 134 of the magnetic flux conducting pieces 130, 131, and collected by the axis-parallel portions 134 to be thereby conducted through the magnetic flux conducting pieces 130, 131.

FIG. 9B shows magnetic fluxes observed when the magnet 410 is offset rightward by 0.5 mm from a reference position shown in FIG. 9A. When the magnet 410 is slightly moved rightward from the reference position, as shown in FIG. 9B, the magnetic flux passes through the magnetic wire 110 from the right magnetic flux conducting piece 130 toward the left magnetic flux conducting piece 131.

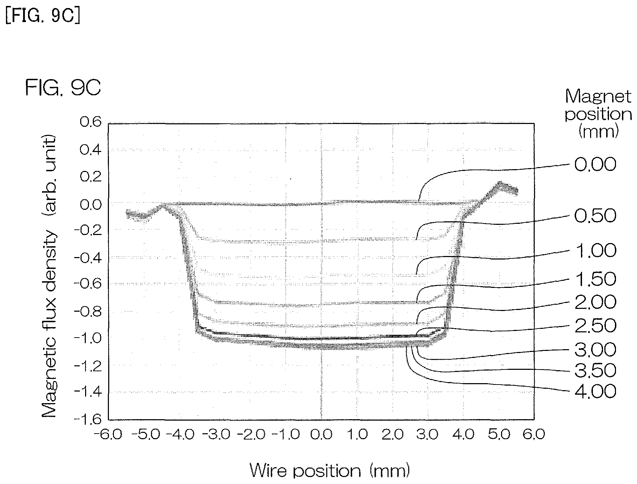

FIG. 9C shows magnetic flux densities observed at different wire positions in the magnetic wire 110 when the magnet 410 is moved rightward from the reference position at a pitch of 0.5 mm to be located at different magnet positions. The abscissa indicates the position in the magnetic wire 110, and the axially middle position of the magnetic wire 110 is defined as 0. The ordinate indicates the magnetic flux density. In the two-dimensional simulation, the direction of the magnetic flux and the tendency of the magnetic flux density can be readily found, but the absolute magnetic flux density cannot be determined. Therefore, the ordinate of the graph has an arbitrary unit (arb. unit). In the graph, a magnetic flux directed from the left to the right is defined as a positive magnetic flux, and a magnetic flux directed from the right to the left is defined as a negative magnetic flux.

As shown, the magnetic flux density in the magnetic wire 110 increases as the magnet position becomes apart from the reference position and, in the inside wire portion of the magnetic wire 110, the magnetic flux density is generally constant and is generally uniform irrespective of the axial position of the magnetic wire 110. Though not shown, magnetic flux densities observed when the magnet is present at magnet positions on the left side of the reference position are substantially the same as those observed when the magnet is present at the magnet positions on the right side of the reference position, but their signs are reversed.

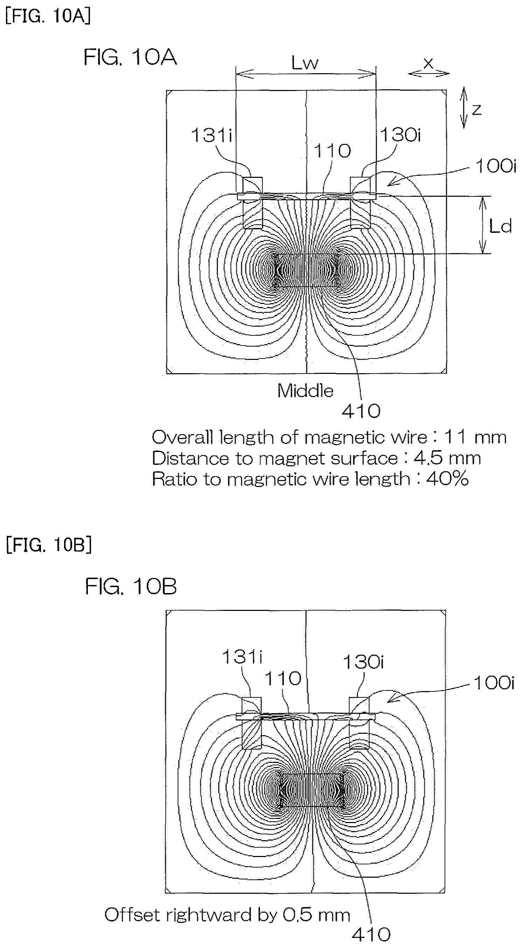

FIGS. 10A and 10B show the result of a two-dimensional magnetic simulation carried out when a magnet 410 is located in the detection region of a power generation sensor 100i including magnetic flux conducting pieces 130i, 131i each having no axis-parallel portion. The magnetic flux conducting pieces 130i, 131i each have an I-shaped structure including only the axis-orthogonal portion extending orthogonally to the axis direction x of the magnetic wire 110. As in the case shown in FIGS. 9A and 9B, the magnet 410 is magnetized in the axis-orthogonal direction z, and the magnetic poles of the magnet 410 are arranged so that the N-pole is opposed to the power generation sensor and the S-pole is opposite from the power generation sensor. The overall length Lw of the magnetic wire 110 is 11 mm, and the distance Ld from the magnet surface to the magnetic wire 110 as measured in the axis orthogonal direction z is 4.5 mm. In this case, the ratio Ld/Lw of the distance Ld to the overall length Lw of the magnetic wire is about 40%.

Without the axis-parallel portions, magnetic fluxes from the magnet 410 enter the axially middle portion of the magnetic wire 110. When the magnet 410 is located in the middle portion of the power generation sensor 100i, as shown in FIG. 10A, the magnetic fluxes are directed in different directions from the axially middle portion of the magnetic wire 110 toward the opposite ends of the magnetic wire 110. FIG. 10B shows magnetic fluxes observed when the magnet 410 is offset rightward by 0.5 mm from a reference position shown in FIG. 10A. As in the case shown in FIG. 10A, the magnetic fluxes from the magnet 410 enter the axially middle portion of the magnetic wire 110 to be directed in different directions from a position slightly rightward of the axially middle position of the magnetic wire 110 toward the opposite ends of the magnetic wire 110.

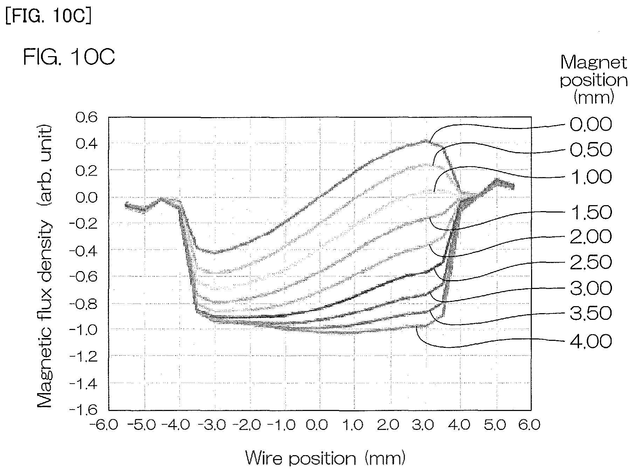

FIG. 10C shows magnetic flux densities observed at different wire positions in the magnetic wire 110 when the magnet 410 is moved rightward from the reference position at a pitch of 0.5 mm to be located at different magnet positions. The abscissa and the ordinate are defined in the same manner as in FIG. 9C. Where the I-shaped magnetic flux conducting pieces 130i, 131i each having no axis-parallel portion are used, as shown in FIG. 10C, the magnetic flux density varies depending on the axial position of the magnetic wire 110 and, therefore, is not uniform along the magnetic wire 110. This may deteriorate the output characteristics, resulting in failure in outputting a voltage pulse.

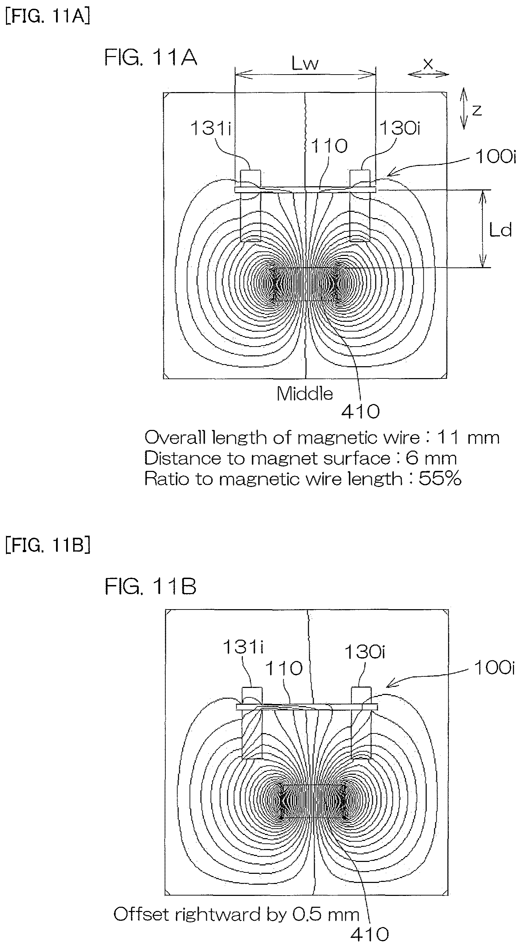

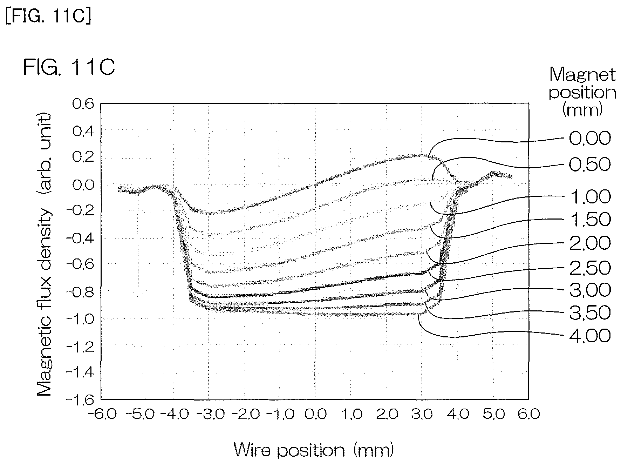

FIGS. 11A, 11B and 11C show the result of a simulation carried out when the distance Ld from the magnet 410 to the magnetic wire 110 as measured in the axis-orthogonal direction z is increased to 6 mm, and the magnetic flux conducting pieces 130i, 131i are extended toward the magnet by a length corresponding to the increase in the distance Ld as compared with the simulation shown in FIGS. 10A to 10C. In this case, the ratio Ld/Lw of the distance Ld to the overall length Lw of the magnetic wire is about 55%. As compared with the case shown in FIGS. 10A, 10B and 10C, the uniformity of the magnetic flux density is improved, but is not sufficient. Further, the uniformity of the magnetic flux density is improved by increasing the distance Ld. However, this increases a dimension as measured in the axis-orthogonal direction z, making it difficult to design a smaller-size pulse signal generator.

Thus, the axis-parallel portions 134 of the L-shaped magnetic flux conducting pieces 130, 131 block the magnetic fluxes entering the axially middle portion of the magnetic wire 110, and collect the magnetic fluxes to guide the magnetic fluxes to the opposite ends of the magnetic wire 110. This improves the uniformity of the magnetic flux density along the overall length of the magnetic wire 110. The use of the I-shaped magnetic flux conducting pieces 130i, 131i each having no axis-parallel portion makes it difficult to provide a design such that the distance Ld between the magnetic wire 110 and the magnet 410 is not greater than 50% of the magnetic wire length Lw. However, the use of the L-shaped magnetic flux conducting pieces 130, 131 each having the axis-parallel portion 134 makes it easier to design the pulse signal generator so that the distance Ld is not greater than 50% of the magnetic wire length Lw. Thus, the size reduction of the pulse signal generator as measured in the axis-orthogonal direction z can be achieved.

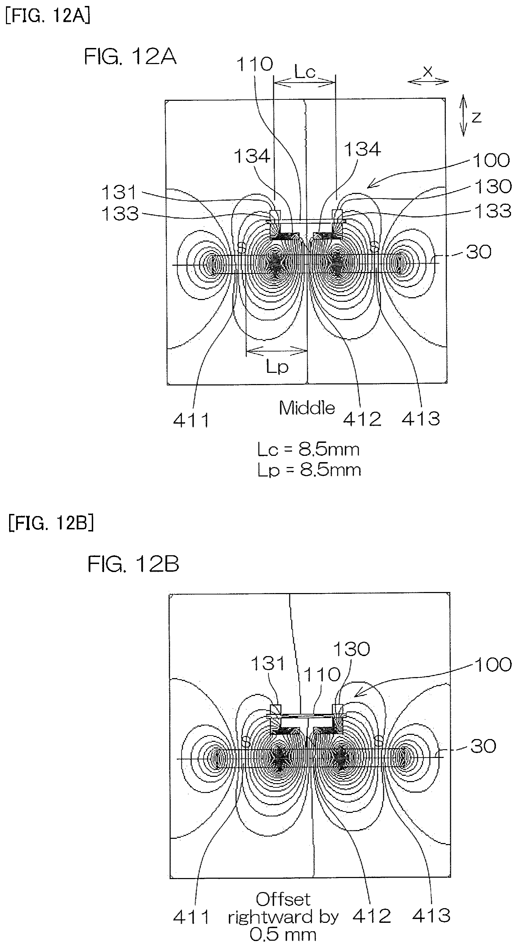

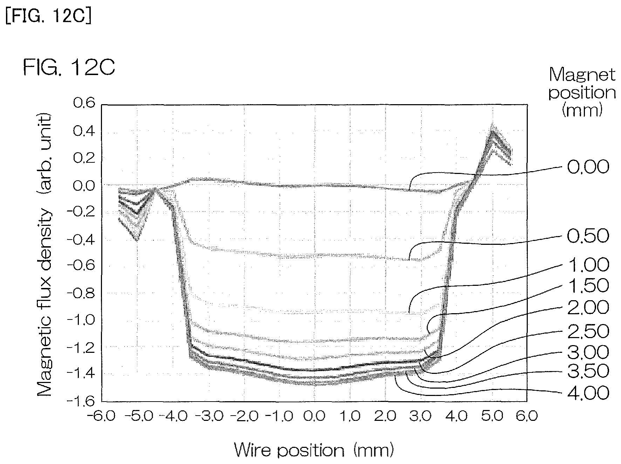

FIGS. 12A, 12B and 12C show the result of a two-dimensional magnetic simulation carried out when magnets 411, 412, 413 are located in the detection region of the power generation sensor 100 including the L-shaped magnetic flux conducting pieces 130, 131 each having the axis-parallel portion. As in the simulation shown in FIGS. 9A to 9C, the overall length Lw of the magnetic wire 110 is 11 mm, and the distance Ld from the magnet surface to the magnetic wire 110 as measured in the axis-orthogonal direction z is 4.5 mm. The ratio Ld/Lw of the distance Ld to the overall length Lw of the magnetic wire is about 40%. Unlike in the simulation shown in FIGS. 9A to 9C, three magnetic poles are arranged on a linear track 30 extending through the detection region parallel to the magnetic wire 110. The three separate magnets 411, 412, 413 used in this example are magnetized in the axis-orthogonal direction z, and the S-pole, the N-pole and the S-pole of the magnets 411, 412, 413 are sequentially arranged. In this example, three disk-shaped separate magnets 411, 412, 413 having the same shape and the same size are prepared, and are arranged along the linear track 30 in contact with each other. Therefore, the magnetic pole pitch Lp is equal to the diameter of each of the separate magnets 411, 412, 413. The magnetic pole pitch Lp is set to 8.5 mm. In this example, the magnetic pole pitch Lp is equal to a distance Lc between the axially middle positions of the pair of axis-orthogonal portions 133, and this is a condition that maximizes the amplitude of the alternating magnetic field to be applied to the magnetic wire 110.

As shown in FIGS. 12A and 12B, the N-pole is located at the center, and the S-poles are located on the opposite sides of the N-pole. In FIG. 12A, the N-pole is opposed to the axially middle position of the magnetic wire 110 and, therefore, boundaries between the N-pole and the S-poles located on the opposite sides of the N-pole are respectively opposed to the axially middle positions of the axis-orthogonal portions 133 of the magnetic flux conducting pieces 130, 131. FIG. 12B shows magnetic fluxes observed when the magnetic poles are moved to be offset rightward by 0.5 mm from reference positions defined by the magnetic pole arrangement shown in FIG. 12A.

As shown in FIG. 12A, no magnetic flux passes through the magnetic wire 110 when the center magnetic pole (N-pole) is opposed to the middle portion of the power generation sensor 100. On the other hand, as shown in FIG. 12B, when the N-pole is slightly moved rightward from the middle portion of the power generation sensor 100, a magnetic flux passes through the magnetic wire 110 from the right magnetic flux conducting piece 130 toward the left magnetic flux conducting piece 131.

FIG. 12C shows magnetic flux densities observed at different wire positions in the magnetic wire 110 when the magnetic poles are moved rightward from the reference positions (see FIG. 12A) at a pitch of 0.5 mm to be located in different magnetic pole arrangements. The abscissa and the ordinate are defined in the same manner as in FIG. 9C. As shown, the magnetic flux density in the magnetic wire 110 increases as the magnetic pole positions become apart from the reference positions and, in the inside wire portion of the magnetic wire 110, the magnetic flux density is generally constant at different axial positions of the magnetic wire 110 and is generally uniform irrespective of the axial position in the magnetic wire 110. The total magnetic flux density is higher than the case employing the single magnet (see FIG. 9C). Though not shown, magnetic flux densities observed when the magnets are located in magnetic pole arrangements on the left side of the reference positions are substantially the same as those observed when the magnets are located in the magnetic pole arrangements on the right side of the reference positions, but their signs are reversed.

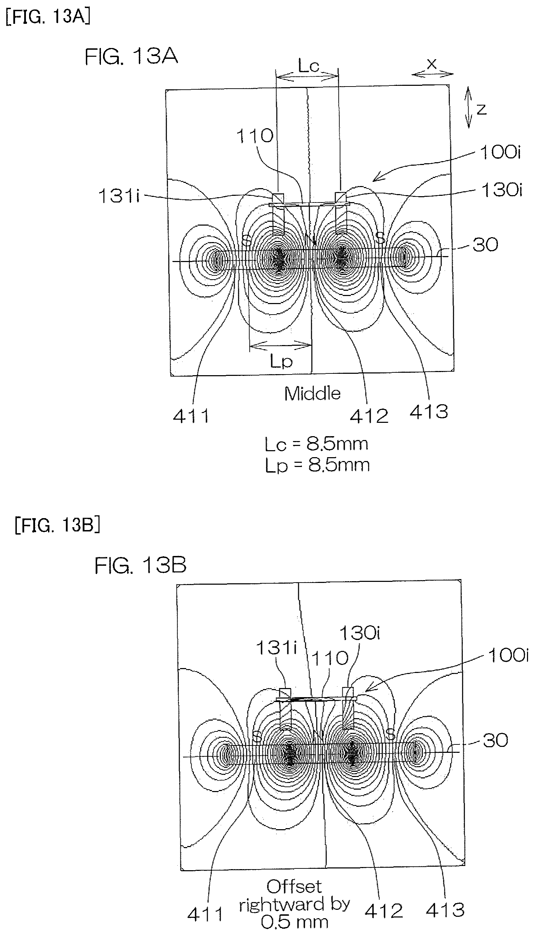

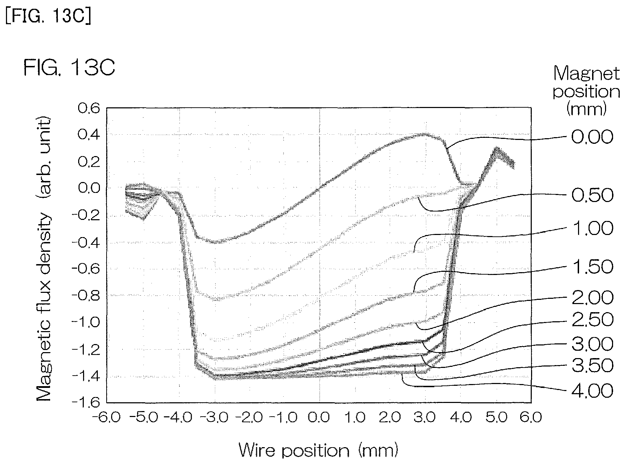

FIGS. 13A, 13B and 13C show the result of a two-dimensional magnetic simulation carried out when magnets 411, 412, 413 are located in the detection region of the power generation sensor 100i including the I-shaped magnetic flux conducting pieces 130i, 131i each having no axis-parallel portion. As in the simulation shown in FIGS. 11A to 11C, the overall length Lw of the magnetic wire 110 is 11 mm, and the distance Ld from the magnet surface to the magnetic wire 110 as measured in the axis-orthogonal direction z is 6 mm. In this case, the ratio Ld/Lw of the distance Ld to the overall length Lw of the magnetic wire is about 55%. As in the simulation shown in FIGS. 12A to 12C, the magnetic field generation source is constituted by the three separate magnets 411, 412, 413.

As can be understood from comparison with FIGS. 11A to 11C, there is the same tendency as in the case in which the magnetic field generation source is constituted by the unitary magnet (single magnet). However, the magnetic flux density is increased as compared with the case employing the unitary magnet (FIGS. 11A to 11C), and the uniformity of the magnetic flux density in the magnetic wire 110 is correspondingly reduced. The magnetic flux density in the axially middle portion of the magnetic wire 110 varies depending on the magnet position.

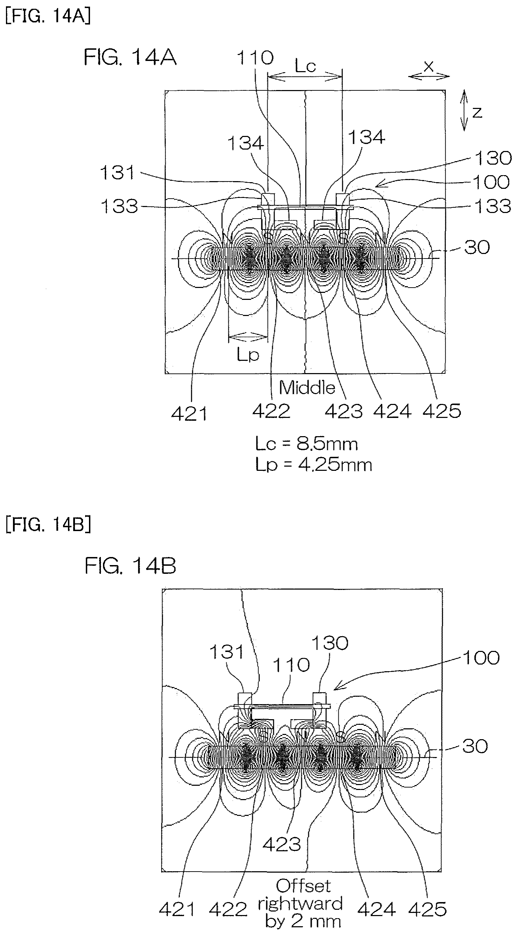

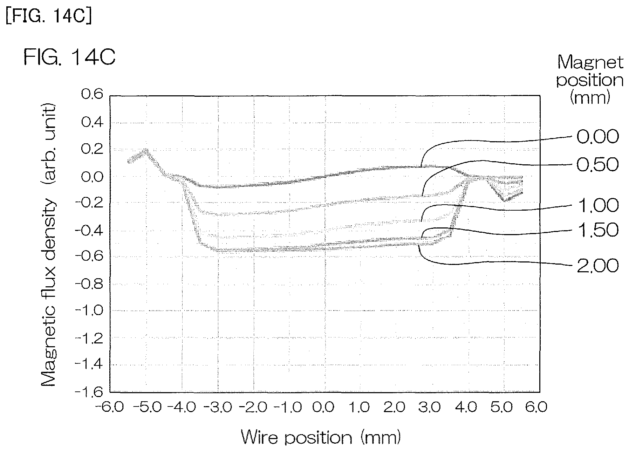

FIGS. 14A, 14B and 14C show the result of a two-dimensional magnetic simulation carried out when magnets 421 to 425 are located in the detection region of the power generation sensor 100 including the L-shaped magnetic flux conducting pieces 130, 131 each having the axis-parallel portion. This simulation is different from the simulation shown in FIGS. 12A to 12C in that the magnetic pole pitch Lp is different, i.e., the magnetic pole pitch Lp is set to 4.25 mm in this example. This magnetic pole pitch Lp corresponds to 50% of the distance Lc between the axially middle positions of the pair of axis-orthogonal portions 133. Specifically, the five magnetic poles are arranged on the linear track 30 extending through the detection region parallel to the magnetic wire 110. The five separate magnets 421 to 425 used in this example are magnetized in the axis-orthogonal direction z, and the N-pole, the S-pole, the N-pole, the S-pole and the N-pole of the separate magnets 421 to 425 are sequentially arranged. In this example, five separate disk-shaped magnets 421 to 425 having the same shape and the same size are prepared, and are arranged along the linear track 30 in contact with each other. Therefore, the magnetic pole pitch Lp is equal to the diameter of each of the separate magnets 421 to 425.

As can be understood from comparison with FIGS. 12A to 12C, the magnetic flux density is reduced by reduction in the magnetic pole pitch Lp, but can vary depending on the magnet position. Further, the magnetic flux density is uniform without any problem. Therefore, the power generation sensor 100 can generate a voltage pulse.

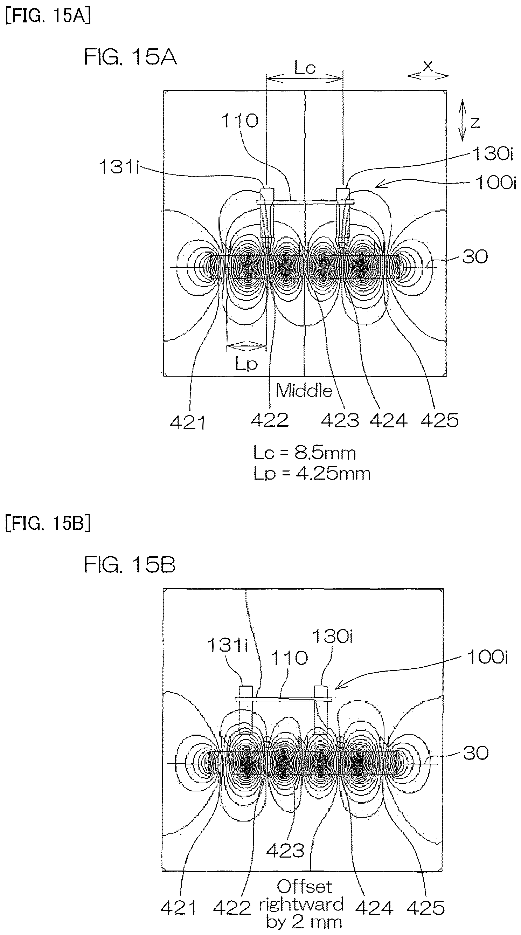

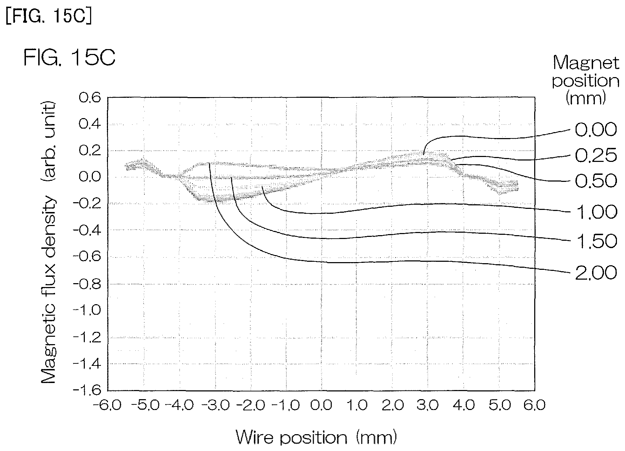

FIGS. 15A, 15B and 15C show the result of a two-dimensional magnetic simulation carried out when magnets 421 to 425 are located in the detection region of the power generation sensor 100i including the I-shaped magnetic flux conducting pieces 130i, 131i each having no axis-parallel portion. This simulation is different from the simulation shown in FIGS. 13A to 13C in that the magnetic pole pitch Lp is different, i.e., the magnetic pole pitch Lp is set to 4.25 mm as in the simulation shown in FIGS. 14A to 14C. That is, the magnetic pole pitch Lp is 50% of the distance Lc between the axially middle positions of the I-shaped magnetic flux conducting pieces 130i, 131i. The magnetic field generation source has the same structure as in the simulation shown in FIGS. 14A to 14C. That is, the five separate magnets 421 to 425 are used, and the five magnetic poles of the five magnets 421 to 425 (the N-pole, the S-pole, the N-pole, the S-pole and the N-pole in this order) are arranged on the linear track 30 extending through the detection region.

As shown in FIG. 15C, there is substantially no change in the magnetic flux density depending on the magnet position. Therefore, no pulse is outputted. Theoretically, the magnetic flux density at the axially middle position of the magnetic wire 110 is not changed. A slight change seen in FIG. 15C is attributable to an error occurring due to the simulation condition. Specifically, this is because no magnet is present on the left side of the leftmost magnet 421.

Thus, the power generation sensor 100i including the I-shaped magnetic flux conducting pieces 130i, 131i each having no axis-parallel portion suffers from significant reduction in the magnetic flux density when being used in combination with the magnets arranged at a magnetic pole pitch Lp that is smaller than the distance Lc between the magnetic flux conducting pieces 130i, 131i (more specifically, the distance between the axially middle positions of the I-shaped magnetic flux conducting pieces 130i, 131i). It is generally necessary to use the power generation sensor 100i in combination with magnets arranged at a magnetic pole pitch that is equal to or longer than the distance between the I-shaped magnetic flux conducting pieces 130i, 131i. Where the magnetic pole pitch is one half the distance between the magnetic flux conducting pieces 130i, 131i, the magnetic flux density at the axially middle position of the magnetic wire 110 is zero. Thus, there is no change in the magnetic flux density even if the magnets are moved. This makes it impossible to generate the pulse signal.

Where the power generation sensor 100 includes the L-shaped magnetic flux conducting pieces 130, 131 each having the axis-parallel portion, in contrast, a relatively stable characteristic property can be ensured even if the magnetic pole pitch Lp is changed. Particularly, even if the magnetic pole pitch Lp is one half the distance Lc between the axis-orthogonal portions 133 of the magnetic flux conducting pieces 130, 131 (more specifically, the distance between the axially middle positions of the axis-orthogonal portions 133), a proper operation can be ensured, making it possible to generate the voltage pulse. Therefore, this design adapts itself to a wider range of the magnetic pole pitch Lp and, even if the magnetic pole pitch Lp is changed, the power generation sensor 100 having the same design can be used.

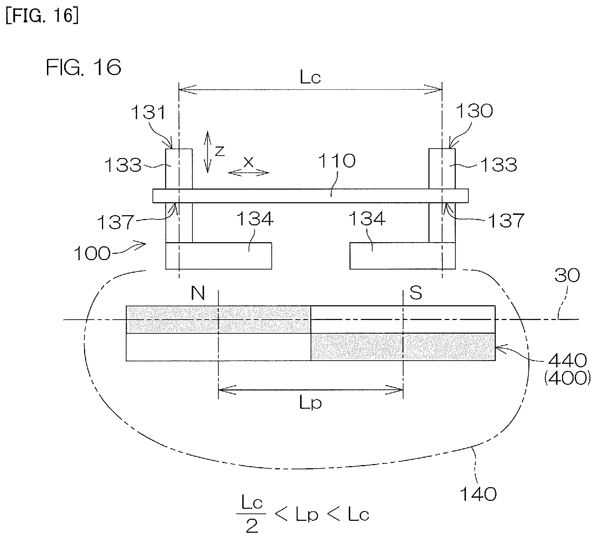

FIG. 16 is a diagram for describing a preferred condition for the magnetic pole pitch Lp by way of example. In this example, the magnetic poles of the magnetic field generation source 400 are constituted by a multipole magnet 440 magnetized in the axis-orthogonal direction z. The magnetic poles are moved along a track 30 having a linear track portion parallel to the magnetic wire 110 in the detection region 140. The movement is relative movement with respect to the power generation sensor 100. The relative movement may be such that the power generation sensor 100 is stationary and the multipole magnet 440 is movable, or may be such that the power generation sensor 100 is movable and the multipole magnet 440 is stationary. Further, the relative movement may be such that both the power generation sensor 100 and the multipole magnet 440 are movable.

An interval between adjacent magnetic poles of the multipole magnet 440, i.e., a magnetic pole pitch Lp, is greater than one half the distance Lc between the axially middle positions of the axis-orthogonal portions 133 of the pair of magnetic flux conducting pieces 130, 131 (Lc/2). In other words, the distance Lc is a distance between the axially middle positions of a pair of crossing portions 137 at which the magnetic wire 110 crosses the axis-orthogonal portions 133 of the pair of magnetic flux conducting pieces 130, 131. If a condition of Lc/2 < Lp is satisfied, the power generation sensor 100 can generate the voltage pulse based on a change in the magnetic field occurring due to the movement of the multipole magnet 440. Even if the magnetic pole pitch Lp is not smaller than the distance Lc, the power generation sensor 100 can generate the voltage pulse. On the other hand, a design such that the magnetic pole pitch Lp is set smaller than the distance Lc is also possible. Thus, the output of the power generation sensor 100 can be used to detect a position at a higher resolution by increasing the number of the magnetic poles per unit length of the track 30 of the multipole magnet 440 substantially without changing the design of the power generation sensor 100. Therefore, the pulse signal generator can be designed so as to be of a linear motion type having a higher resolution by setting the magnetic pole pitch Lp in a range of Lc/2 < Lp < Lc substantially without changing the design of the power generation sensor 100.

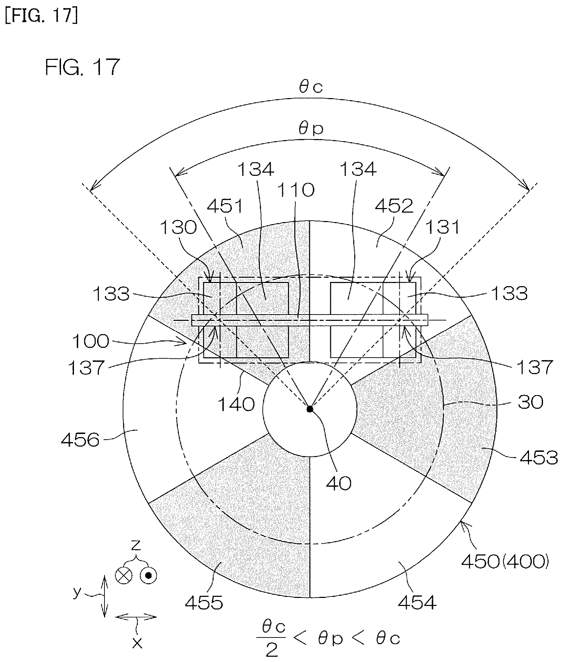

FIG. 17 is a diagram for describing another preferred condition for the magnetic pole pitch by way of example. In this example, the magnetic poles of the magnetic field generation source 400 are constituted by a multipole magnet 450 magnetized in the axis-orthogonal direction z. More specifically, the multipole magnet 450 is a ring-shaped magnet that is disposed with its center present on the center axis 40 parallel to the axis-orthogonal direction z (perpendicular to the paper surface of FIG. 17) and is rotatively moved about the center axis 40 (rotation axis), and is magnetized so as to have equiangular regions serving as magnetic poles 451 to 456. The rotative movement is relative movement with respect to the power generation sensor 100. The rotative movement may be such that the power generation sensor 100 is stationary and the multipole magnet 450 is rotatively movable, or may be such that the power generation sensor 100 is rotatively movable and the multipole magnet 450 is stationary. Further, the rotative movement may be such that both the power generation sensor 100 and the multipole magnet 450 are rotatively movable. By the rotative movement, the magnetic poles 451 to 456 of the multipole magnet 450 are moved along a track 30 including an arcuate track portion having a tangential line parallel to the magnetic wire 110 in the detection region 140. In this example, the track 30 is a circular track as a whole with its center present on the center axis 40.

In this case, it is reasonable that an interval between each two adjacent magnetic poles of the multipole magnet 450 is defined by an angular interval as seen along the center axis 40, i.e., a magnetic pole angular pitch θp. Then, an angular interval θc between the axis-orthogonal portions 133 of the pair of magnetic flux conducting pieces 130, 131 as seen along the center axis 40 is employed for the description. Specifically, the angular interval θc is an interline angle defined between two half-lines respectively extending from the center axis 40 to the axially middle positions of the axis-orthogonal portions 133 on the magnetic wire 110 as seen in plan along the center axis 40. In other words, the angular interval θc is an interline angle defined between a pair of half-lines extending perpendicularly from the center axis 40 to the axially middle positions of the pair of crossing portions 137 at which the magnetic wire 110 crosses the axis-orthogonal portions 133 of the pair of magnetic flux conducting pieces 130, 131.

An interval between magnetic poles disposed in circumferentially adjacent relation about the center axis 40, i.e., the magnetic pole angular pitch θp, is greater than one half the angular interval θc defined between the axially middle positions of the axis-orthogonal portions 133 of the pair of magnetic flux conducting pieces 130, 131. If this condition is satisfied, the power generation sensor 100 can generate the voltage pulse based on a change in the magnetic field occurring due to the rotative movement of the multipole magnet 450. Even if the angular pitch θp of the magnetic poles is not smaller than the angular interval θc, the power generation sensor can generate the voltage pulse. On the other hand, a design such that the angular pitch θp of the magnetic poles is smaller than the angular interval θc is also possible. Thus, the output of the power generation sensor 100 can be used to detect the rotational position at a higher resolution by increasing the number of the magnetic poles substantially without changing the design of the power generation sensor 100 and without increasing the diameter of the multipole magnet 450. Therefore, the pulse signal generator can be designed so as to be of a rotary type having a higher resolution by setting the magnetic pole angular pitch θp in a range of θc/2 < θp < θc substantially without changing the design of the power generation sensor 100 and without increasing the size of the magnet 450.

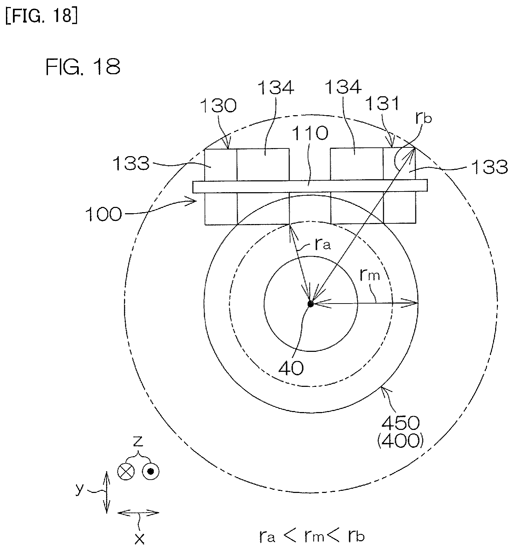

FIG. 18 is a plan view for describing a relationship between the size of the power generation sensor 100 and the size of the multipole magnet 450 in the rotary pulse signal generator. The L-shaped magnetic flux conducting pieces 130, 131 each including the axis-parallel portion 134 each have a greater magnet opposition area, i.e., a greater magnetic flux collecting area, than the I-shaped magnetic flux conducting pieces each having no axis-parallel portion 134. Even if the L-shaped magnetic flux conducting pieces are used together with a magnet having a smaller size than that used in combination with the I-shaped magnetic flux conducting pieces, therefore, the power generation sensor 100 can output the voltage pulse. Specifically, the power generation sensor employing the I-shaped magnetic flux conducting pieces each having no axis-parallel portion is generally designed so that the magnetic flux conducting pieces are entirely disposed inside the outer periphery of the multipole magnet 450 as seen in plan along the center axis 40 (rotation axis). That is, a magnet having a radius not smaller than a distance rb from the center axis 40 to the furthest end of the magnetic flux conducting piece is used. In the case of the power generation sensor 100 employing the magnetic flux conducting pieces 130, 131 each having the axis-parallel portion 134, on the other hand, the magnetic fluxes are collected by the axis-parallel portions 134, so that a magnet having a radius smaller than the distance rb can be used. More specifically, if the magnet 450 to be used has a radius greater than a distance ra from the center axis 40 to the nearest end of the magnetic flux conducting piece 130, 131, the power generation sensor 100 can be designed so as to be capable of generating the voltage pulse based on the rotation of the magnet 450. For the size reduction of the pulse signal generator, it is advantageous that the magnet 450 has a smaller radius and, therefore, the radius rm of the magnet 450 preferably falls within a range of ra < rm < rb.

To generalize the design to a case in which the magnet is not a rotating body rotatable about the center axis 40, the outer peripheral radius of the rotation path of the magnet observed when the magnetic poles are moved along the arcuate track portion of the track 30 in the detection region 140 is defined as rm. Then, the outer peripheral radius rm preferably satisfies the inequality described above.

The pulse signal generator of this type is used for measurement apparatuses such as flow meters and encoders. These measurement apparatuses require reduction in size and improvement in resolution. For the size reduction of the apparatuses, the pulse signal generator is required to be designed to have a reduced footprint and a reduced height.

For the height reduction, it is necessary to design the pulse signal generator by using a smaller magnet while reducing the distance between the magnet and the power generation sensor. In the case of the conventional power generation sensor, however, the magnetic flux is liable to directly enter the axially middle portion of the magnetic wire if the magnet is disposed closer to the power generation sensor. This brings about a problem associated with the uniformity of the magnetic flux density in the magnetic wire. Therefore, it is necessary to provide a sufficient distance between the magnetic wire and the magnet or to provide a magnetic flux blocking structure separately from the power generation sensor (see PTL 3). This makes the size reduction difficult. If the distance between the magnetic wire and the magnet is increased, it is necessary to use a stronger and larger magnet because the strength of the magnetic field is inversely proportional to the square of the distance. This further prevents the size reduction. In this example embodiment, the magnet can be located significantly closer to the power generation sensor 100 to be spaced a distance not greater than one half the magnetic wire length Lw from the power generation sensor 100 without the use of the separate blocking structure. This makes it possible to reduce the size of the pulse signal generator to a level that cannot be achieved with the use of the conventional power generation sensor.

For the improvement of the resolution, on the other hand, it is necessary to increase the number of alternating magnetic field cycles with respect to the same displacement, hence requiring a design with a magnet having a reduce magnetic pole pitch. In general, the magnetic pole pitch of the magnetic field generation source to be used in combination with the power generation sensor is designed according to the magnetic wire length (the distance between the magnetic flux conducting pieces). For the detection of the rotation, therefore, it is generally necessary to increase a detection radius (the distance from the rotation axis to the magnetic wire) proportionally to the number of magnetic poles. The power generation sensor 100 according to this example embodiment includes the L-shaped magnetic flux conducting pieces 130, 131 each having the axis-parallel portion 134. Therefore, this arrangement can adapt itself to a magnetic pole pitch smaller than the magnetic wire length (the distance between the magnetic flux conducting pieces). Thus, the number of poles can be increased for the same detection radius.

If the number of the magnetic poles is increased for the magnet having the same radius, the strength of the magnetic field per each pole is reduced, so that the magnetic field only reaches nearby. Therefore, it is necessary to detect the magnetic field at a position closer to the magnet. As described above, the power generation sensor 100 according to this example embodiment can detect the magnetic field near the magnet. That is, the axis-parallel portions 134 of the magnetic flux conducting pieces 130, 131 block the magnetic flux directed toward the axially middle portion of the magnetic wire 110, making it possible to reduce the distance between the magnetic wire 110 and the magnet.

For the size reduction, it is advantageous to use a smaller magnet. In the power generation sensor 100 according to this example embodiment, the axis-parallel portions 134 of the magnetic flux conducting pieces 130, 131 collect the magnetic field, so that magnetic fluxes necessary for the generation of the voltage pulse can be collected even with the axis-parallel portions 134 partly opposed to the magnet. Therefore, the detection can be achieved with the use of a smaller magnet, making it possible to reduce the size of the pulse signal generator 1. The electric power of the pulse signal to be generated by the power generation sensor 100 is generally determined by the length of the magnetic wire 110. Therefore, the size reduction of the pulse signal generator 1 can be achieved by setting the length of the magnetic wire 110 according to the required electric power without changing the length of the magnetic wire 110.

### [Second Example Embodiment]

The magnetic flux conducting pieces 130, 131 of the power generation sensor 100 according to the first example embodiment each have the flat surface opposed to the magnetic field generation source (opposed to the detection region 140). Therefore, the flat surface can be used as a surface-mounting area.

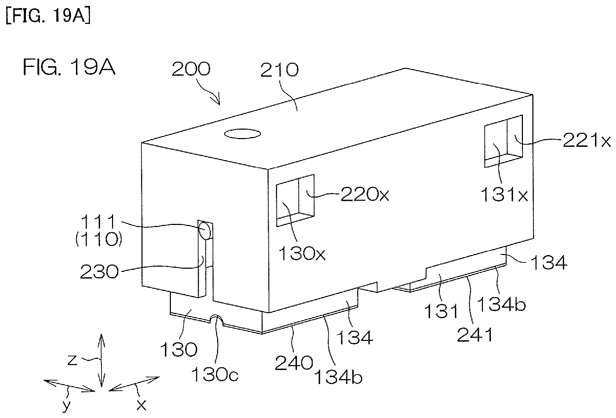

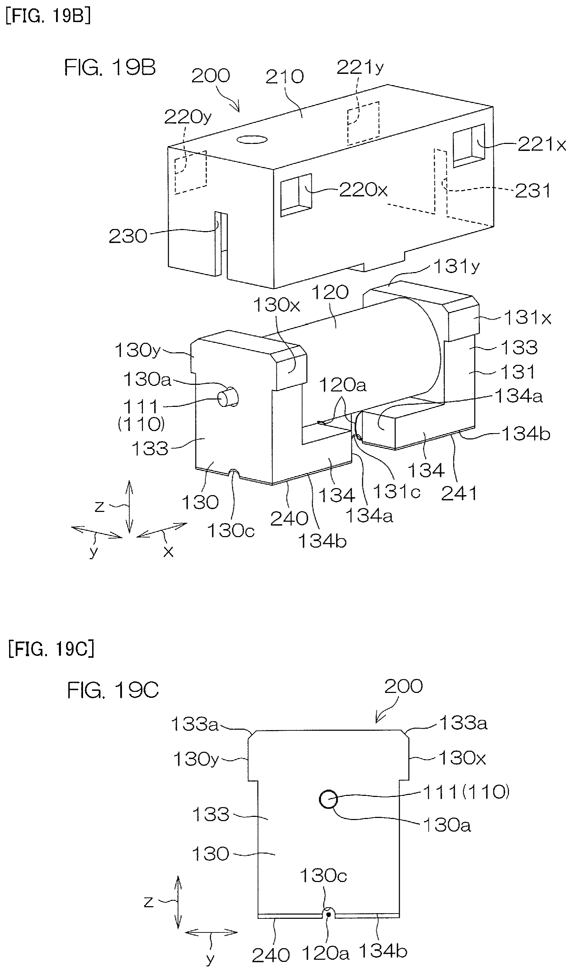

FIGS. 19A, 19B and 19C are a perspective view, a partly exploded perspective view and a side view, respectively, for describing the structure of a power generation sensor 200 according to a second example embodiment. In the description of the second example embodiment, components corresponding to those described above in the first example embodiment will be denoted by the same reference characters as in the first example embodiment.

In the power generation sensor 200 according to the second example embodiment, external terminal electrodes 240, 241 to be surface-mounted are provided directly on the magnetic flux conducting pieces 130, 131 of the magnetically soft components.

Specifically, the external terminal electrodes 240, 241 are respectively provided on the surfaces of the magnetic flux conducting pieces 130, 131 opposed to the magnetic field generation source. More specifically, the external terminal electrodes 240, 241 are respectively provided on the detection region opposition surfaces 134b of the axis-parallel portions 134, i.e., the surfaces of the axis-parallel portions 134 opposite from the magnetic wire 110. The external terminal electrodes 240, 241 each include, for example, a plating layer or an electrically conductive paste and a solder layer. In this example embodiment, the external terminal electrodes 240, 241 respectively entirely cover the detection region opposition surfaces 134b of the axis-parallel portions 134. Alternatively, the external terminal electrodes 240, 241 may respectively partly cover the detection region opposition surfaces 134b of the axis-parallel portions 134.

The power generation sensor 200 according to this example embodiment further includes a case 210 that accommodates the magnetic wire 110, the coil 120 and the magnetic flux conducting pieces 130, 131. The case 210 is configured in a box shape having an opening on the side of the detection region opposition surfaces 134b of the magnetic flux conducting pieces 130, 131 so that the magnetic wire 110, the coil 120 and the magnetic flux conducting pieces 130, 131 are accommodated therein with the detection region opposition surfaces 134b of the magnetic flux conducting pieces 130, 131 exposed from the opening. As described above, the magnetic wire 110 is fixed to the magnetic flux conducting pieces 130, 131. Specifically, the opposite end portions 111, 112 of the magnetic wire 110 are respectively fixed to the wire placement portions 130a, 131a each having a hole or a groove extending through the axis-orthogonal portion 133 of the magnetic flux conducting piece 130, 131 with a resin. Further, the magnetic flux conducting pieces 130, 131 and the coil 120 are fixed to the case 210, for example, by an adhesive resin and/or by fitting engagement. Thus, the power generation sensor 200 is provided, which is a complete unit including the case 210.

The partly exploded perspective view of FIG. 19B shows a state observed before the case 210 is fitted, and the side view of FIG. 19C is a view seen from the magnetic flux conducting piece 130 in the axis direction x with the case 210 removed. In this example embodiment, the axis-orthogonal portions 133 each have a generally parallelepiped shape, and each include projections 130x, 130y; 131x, 131y provided on opposite sides thereof with respect to the widthwise direction y perpendicular to the axis direction x and parallel to the detection region opposition surface 134b as projecting in the widthwise direction y. In the illustrated example, these projections 130x, 130y; 131x, 131y are provided on a side of the magnetic wire 110 opposite from the detection region opposition surfaces 134b. End surfaces of the axis-orthogonal portions 133 opposite from the detection region opposition surfaces 134b each have chamfer portions 133a (e.g., rounded chamfer portions) provided along opposite edges thereof with respect to the widthwise direction y. The chamfer portions 133a function as guide portions for smooth insertion into the case 210.

The case 210 has holes 220x, 220y; 221x, 221y formed at corresponding positions thereof to be respectively fitted with the projections 130x, 130y; 131x, 131y of the magnetic flux conducting pieces 130, 131. Further, the case 210 is formed with slits 230, 231 that prevent the opposite end portions of the magnetic wire 110 from contacting the case 210 when the power generation sensor 200 is fitted in the case 210. The slits 230, 231 extend in the axis-orthogonal direction z perpendicular to the detection region opposition surfaces 134b, and the power generation sensor 200 is fitted in the case 210 so that the opposite end portions of the magnetic wire 110 are inserted in the slits 230, 231 in the axis-orthogonal direction z.

As best seen in FIG. 19C (the side view as seen in the axis direction x), the detection region opposition surfaces 134b of the magnetic flux conducting pieces 130, 131 are respectively formed with grooves 130c, 131c through which terminal lines 120a are routed for electrical contact with the coil 120. The terminal lines 120a are respectively connected to the external terminal electrodes 240, 241 by the solder layers in the grooves 130c, 131c. In a production process, for example, it is preferred to respectively provide the terminal lines 120a in the grooves 130c, 131c and then respectively form the external terminal electrodes 240, 241 on the detection region opposition surfaces 134b. As shown in FIG. 19B, the grooves 130c, 131c may respectively continuously extend to the adjacent ends 134a of the axis-parallel portions 134.

### [Other example embodiments]

While the example embodiments of the present invention have thus been described, the invention may be embodied in some other ways to be described below by way of examples.

In the example embodiments described above, the magnetic flux conducting pieces 130, 131 are L-shaped unitary members, but may be magnetic flux conducting pieces each including a combination of two parallelepiped portions serving as the axis-orthogonal portion 133 and the axis-parallel portion 134. In this case, the two parallelepiped portions are preferably combined together to form an L shape. However, the two parallelepiped portions are not necessarily required to be combined together into a perfect L-shape but, for example, may be disposed (in a T-shaped arrangement) so that the end surface of the parallelepiped portion serving as the axis-orthogonal portion is disposed in abutment against the axially middle portion of the parallelepiped portion serving as the axis-parallel portion. The two parallelepiped portions may be composed of the same magnetically soft material, or may be composed of different magnetically soft materials, which are preferably selected from the material category described above.

Further, the axis-orthogonal portions and the axis-parallel portions of the magnetic flux conducting pieces are not necessarily required to each have a perfect parallelepiped shape, but may be modified in shape according to requirements for the layout, the assembling ease, the structure retainability and the like of the coil. Even in this case, the detection performance of the power generation sensor can be ensured. For example, the axis-parallel portions may be each formed with a hollow cylindrical recess that receives the coil. Further, the axis-orthogonal portions 133 are not necessarily required to each have a uniform thickness as measured in the axis direction x at different positions along the axis-orthogonal direction z. For example, the axis-orthogonal portions 133 may each have a thickness, as measured in the axis direction x, that is smaller on a side thereof adjacent to the detection region opposition surface 134b and greater on a side thereof opposite from the detection region opposition surface 134b, and is linearly changed in a region thereof between these sides. That is, the axis-orthogonal portions 133 may each have a taper shape that is tapered toward the detection region opposition surface 134b in the axis-orthogonal direction z. Thus, the axis-orthogonal portions 133 and the axis-parallel portions 134 are not necessarily required to each have a strictly parallelepiped shape, but may each have a generally parallelepiped shape as long as the magnetic field correcting function of the magnetic flux conducting pieces 130, 131 is not impaired. The axis-orthogonal portions 133 and the axis-parallel portions 134 are preferably each configured in a generally parallelepiped shape, but may be configured in some other shape that ensures the magnetic field correcting function as described above.

In the second example embodiment described above, the external terminal electrodes 240, 241 are respectively provided on the detection region opposition surfaces 134b, but may be each provided in the form of lead frame. For example, the lead frame may be formed in conformity with the shape of the magnetic flux conducting piece 130, 131, and may have a bottom portion extending along the detection region opposition surface 134b to serve as an external connection terminal to be surface-mounted for connection to the printed board or the like.

In the example embodiments described above, the pair of magnetic flux conducting pieces 130, 131 are symmetrical with each other with respect to the symmetry plane 115 defined at the axially middle position 113 of the magnetic wire 110. In this case, the term "symmetrical" does not necessarily mean "geometrically strictly symmetrical" but may mean that variations are permitted as long as the magnetic field correcting function of the magnetic flux conducting pieces 130, 131 is not influenced.

While the present invention has thus been described in detail by way of the example embodiments thereof, it should be understood that these example embodiments are merely illustrative of the technical principles of the present invention but not limitative of the invention. The scope of the present invention is to be limited only by the appended claims.

### DESCRIPTION OF REFERENCE CHARACTERS

1: Pulse signal generator
2: Rotation detection device
20: Printed board
30: Track
40: Center axis
100: Power generation sensor
110: Magnetic wire
113: Axially middle position
120: Coil
130: Magnetic flux conducting piece
131: Magnetic flux conducting piece
133: Axis-orthogonal portions
134: Axis-parallel portions
134a: Adjacent ends
134b: Detection region opposition surfaces
140: Detection region
200: Power generation sensor
240: External terminal electrode
241: External terminal electrode
400: Magnetic field generation source
401: Magnetic poles
410: Magnet
411 to 413: Magnets
420: Magnet
421 to 425: Magnets
430: Magnets
440: Multipole magnet
450: Multipole magnet
451 to 455: Magnetic poles
456: Magnetic pole
D: Distance
L: Distance
Lc: Distance
Ld: Distance
Lp: Magnetic pole pitch
Lw: Magnetic wire length
M: Ring magnet
M1 to M4: Separate magnets
n1, n2, n3: N-poles
s1, s2, s3: S-poles
ra: Distance
rb: Distance
rm: Radius
θc: Angular interval
θp: Magnetic pole angular pitch
x: Axis direction
y: Widthwise direction
z: Axis-orthogonal direction

## Claims

1. A pulse signal generator (1) which generates a pulse signal based on relative movement of a power generation sensor (100) and a magnetic field generation source (400),
wherein the power generation sensor (100) comprises:
a magnetic wire (110) that is caused to exhibit a large Barkhausen effect by an alternating magnetic field applied thereto in an axis direction (x) thereof;
a coil (120) wound around the magnetic wire (110); and
a pair of magnetic flux conducting pieces (130, 131) that include a pair of magnetically soft components respectively magnetically coupled to opposite end portions of the magnetic wire (110) and are symmetrical with each other with respect to a symmetry plane (115) defined at an axially middle position (113) of the magnetic wire (110) with respect to the axis direction (x),
wherein the pair of magnetic flux conducting pieces (130, 131) include: a pair of axis-orthogonal portions (133) respectively fixed to the opposite end portions of the magnetic wire (110) and extending parallel to each other in an axis-orthogonal direction (z) orthogonal to the axis direction (x) respectively from the opposite end portions of the magnetic wire (110); and a pair of axis-parallel portions (134) extending toward each other in the axis direction (x) from distal ends of the axis-orthogonal portions (133) with their adjacent ends (134a) opposed to and spaced a gap from each other in the axis direction (x),
wherein a distance (L) of the gap between the adjacent ends (134a) as measured in the axis direction (x) is 5% to 50% of a distance (D) between magnetic wire connection positions of the pair of axis-orthogonal portions (133) as measured in the axis direction (x),
wherein the power generation sensor (100) is configured to have a detection region (140) located on a side of the axis-parallel portions (134) opposite from the magnetic wire (110),
wherein the power generation sensor (100) and the magnetic field generation source (400) are disposed with a gap (21) defined therebetween in the axis-orthogonal direction (z),
wherein the magnetic field generation source (400) has at least one magnetic pole (401, 451-456, n1-n3, s1-s3) that is moved along a track (30) extending through the detection region (140) by the relative movement, and the track includes a linear track portion extending parallel to the axis direction (x) in the detection region (140), or an arcuate track portion having a tangential line extending parallel to the axis direction (x) in the detection region (140).

2. The pulse signal generator (1) according to claim 1, wherein the pair of magnetic flux conducting pieces (130, 131) are configured to block a magnetic field directed toward an axially middle portion of the magnetic wire (110) from a part of the magnetic field generation source (400) present in the detection region (140), and to correct a magnetic field generated in a space containing the pair of magnetic flux conducting pieces (130, 131) into a magnetic field directed in the axis direction (x) and apply the corrected magnetic field to the magnetic wire (110).

3. The pulse signal generator (1) according to claim 1 or 2, wherein the distance (L) of the gap between the adjacent ends (134a) as measured in the axis direction (x) is 20% to 40% of the distance (D) between the magnetic wire connection positions of the pair of axis-orthogonal portions (133) as measured in the axis direction (x).

4. The pulse signal generator (1) according to any one of claims 1 to 3,
wherein the axis-orthogonal portions (133) of the magnetic flux conducting pieces (130, 131) respectively have wire placement portions (130a, 131a) each formed with a hole or a groove extending therethrough in the axis direction (x),
wherein the magnetic wire (110) extends through the wire placement portions (130a, 131a) of the axis-orthogonal portions (133) and is fixed to the axis-orthogonal portions (133).

5. The pulse signal generator (1) according to any one of claims 1 to 4, wherein a thickness (W) of each of the axis-orthogonal portions (133) as measured in the axis direction (x) at the magnetic wire connection position is 10% to 20% of an overall length (Lw) of the magnetic wire (110).

6. The pulse signal generator (1) according to any one of claims 1 to 5, wherein the magnetically soft components are each composed of a material having a magnetic permeability of not less than 500 and a coercivity that is not greater than that of the magnetic wire (110).

7. The pulse signal generator (1) according to any one of claims 1 to 6, wherein the power generation sensor (100) further comprises surface-mounting external terminal electrodes (240, 241) respectively provided on the axis-parallel portions (134) of the magnetic flux conducting pieces (130, 131) as facing the detection region (140).

8. The pulse signal generator (1) according to any one of claims 1 to 7 further comprising a printed board (20) provided between the power generation sensor (100) and the magnetic field generation source (400).

9. The pulse signal generator (1) according to any one of claims 1 to 8,
wherein the magnetic field generation source (400) includes a magnet (410-413, 420-425, 430, 440, 450, M, M1-M4) having the magnetic pole (401, 451-456, n1-n3, s1-s3),
wherein a distance (Ld) between the magnetic wire (110) and the magnet (410-413, 420-425, 430, 440, 450, M, M1-M4) as measured in the axis-orthogonal direction (z) when the magnetic pole (401, 451-456, n1-n3, s1-s3) is present on the track (30) in the detection region (140) is not greater than 50% of the overall length (Lw) of the magnetic wire (110).

10. The pulse signal generator (1) according to any one of claims 1 to 9,
wherein the track (30) has the linear track portion,
wherein the magnetic field generation source (400) has a plurality of magnetic poles (401, 451-456, n1-n3, s1-s3),
wherein a magnetic pole pitch (Lp) of the magnetic poles (401, 451-456, n1-n3, s1-s3) is shorter than a distance (Lc) between axially middle positions of a pair of crossing portions (137), defined with respect to the axis direction (x), at which the magnetic wire (110) crosses the axis-orthogonal portions (133) of the pair of magnetic flux conducting pieces (130, 131), and is longer than one half the distance (Lc) between the axially middle positions of the pair of crossing portions (137).

11. The pulse signal generator (1) according to any one of claims 1 to 9,
wherein the track (30) has the arcuate track portion,
wherein the magnetic field generation source (400) has a plurality of magnetic poles (401, 451-456, n1-n3, s1-s3),
wherein an angular pitch (θp) of the magnetic poles (401, 451-456, n1-n3, s1-s3) about a center axis (40) of the arcuate track portion is smaller than an interline angle (θc) defined between a pair of half-lines respectively extending perpendicularly from the center axis (40) to axially middle positions of a pair of crossing portions (137), defined with respect to the axis direction (x), at which the magnetic wire (110) crosses the axis-orthogonal portions (133) of the pair of magnetic flux conducting pieces (130, 131), and is greater than one half the interline angle (θc).

12. The pulse signal generator (1) according to any one of claims 1 to 11,
wherein the track (30) has the arcuate track portion,
wherein the magnetic field generation source (400) includes a magnet (410-413, 420-425, 430, 440, 450, M, M1-M4) having the magnetic pole (401, 451-456, n1-n3, s1-s3),
wherein an outer radius (rm) of a rotation path of the magnet (410-413, 420-425, 430, 440, 450, M, M1-M4) observed when the magnetic pole (401, 451-456, n1-n3, s1-s3) is moved along the arcuate track portion is greater than a distance (ra) between a center axis (40) of the arcuate track portion and a nearest end of each of the magnetic flux conducting pieces (130, 131), and is smaller than a distance (rb) between the center axis (40) and a furthest end of each of the magnetic flux conducting pieces (130, 131).

13. The pulse signal generator (1) according to any one of claims 1 to 12, wherein the magnetic field generation source (400) has a single magnet (440, 450, M) having a disk shape or a ring shape.

14. An encoder (2) comprising the pulse signal generator (1) according to any one of claims 1 to 13.
